(19) Europäisches Patentamt
European Patent Office
Office européen des brevets

(11) EP 4 760 626 A1

(12) EUROPEAN PATENT APPLICATION

(43) Date of publication:
17.06.2026 Bulletin 2026/25

(21) Application number: 25218656.4

(22) Date of filing: 26.11.2025

(51) International Patent Classification (IPC):
G06Q 50/06 (2024.01)      G06N 3/08 (2023.01)
G06N 3/045 (2023.01)      G01C 21/34 (2006.01)

(52) Cooperative Patent Classification (CPC):
G06N 3/08; G01C 21/3469; G06N 3/006;
G06N 3/045; G06N 3/047; G06N 3/084; G06N 7/01;
G06N 20/00; G06Q 50/06; F02D 2200/0625

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 16.12.2024  IN 202411099575
13.02.2025  US 202519053081

(71) Applicant: Honeywell International Inc.
Charlotte, NC 28202 (US)

(72) Inventors:
• RAJENDRAN, Ramkumar
Charlotte, 28202 (US)
• KHAN, Kalimulla
Charlotte, 28202 (US)
• JANAKIRAMAN, Kirupakar
Charlotte, 28202 (US)
• MANI, Krishna
Charlotte, 28202 (US)
• RAO, Nayyar Azam Khan
Charlotte, 28202 (US)

(74) Representative: Haseltine Lake Kempner LLP
Cheapside House
138 Cheapside
London EC2V 6BJ (GB)

(54) **APPARATUSES, COMPUTER-IMPLEMENTED METHODS, AND COMPUTER PROGRAM PRODUCTS FOR GENERATING FUELING PLANS TO REDUCE GREENHOUSE GAS IMPACT**

(57) Embodiments of the disclosure provide generative AI-based techniques for generating fueling plans to reduce greenhouse gas (GHG) impact. In the context of a method, the method includes obtaining travel pathway data for a vehicle, the travel pathway data comprising current environmental data and historical environmental data in accordance with at least a portion of the travel pathway; generating, via a generative AI model, a fueling plan for the vehicle along the at least a portion of the travel pathway based on the current environmental data and the historical environmental data, wherein: a reward function of the generative AI model is based on a negative summation of at least one greenhouse emission estimate for the vehicle along the at least a portion of the travel pathway and at least one fuel availability parameter; and executing the fueling plan to control fuel utilized by the vehicle during navigation along the travel pathway.

FIG. 1

## Description

### TECHNOLOGICAL FIELD

Embodiments of the present disclosure are generally directed to generative artificial intelligence (AI) techniques for generating fueling plans configured to reduce the greenhouse gas (GHG) impact of a vehicle.

### BACKGROUND

Vehicle-reliant industries may demonstrate significant impact on atmospheric GHG concentrations due to the burning of fossil fuels. For example, in an aerial context, the burning of conventional jet fuel releases substantial amounts of carbon dioxide and other greenhouse gases into the atmosphere, which may contribute to global heating. To reduce GHG impact, vehicles may be supplied with supplemental fuels configured to reduce harmful emissions. For example, sustainable aviation fuel (SFA) may be utilized to reduce the GHG impact of an aircraft. However, alternative fuels may demonstrate higher comparative costs and lower engine efficiency. As a result, fuel-based strategies for offsetting GHG impact may face challenges due to the cost-benefit imbalance of adopting such alternative fuel types.

Applicant has discovered various technical problems associated with generating fuel plans configured to reduce GHG impact. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for generative AI-based fuel planning. For example, embodiments of the present disclosure are configured to predict GHG impact of a vehicle along a travel pathway and generate fueling plans configured to minimize the GHG impact of the vehicle while optimizing for the resource cost of fueling the vehicle. In doing so, the methods, apparatuses, and computer program products described herein may reduce vehicle GHG impact while minimizing reductions in vehicle efficiency and increases to operational costs. For example, the various embodiments of the disclosure may generate fuel plans for optimally mixing or switching between conventional and reduced-emission fuel types, whereas existing approaches may be limited to using only a single fuel type (e.g., conventional fuel to achieve desired performance or lower-emission fuel to achieve desired GHG impact reductions).

The present methods, apparatuses, and computer program products may improve the real-time adoption of reduced-emission fuels by estimating GHG emissions, predicting GHG impacts, dynamically adjusting fueling plans to mix or switch between conventional fossil and reduced-emission fuel types. In doing so, the methods, apparatuses, and computer program products may optimize fuel usage and GHG impact at a granular level such that vehicle operators may overcome technical and resource limitations of reduced-emission fuel and satisfy GHG impact reduction targets. The various embodiments of the present disclosure may integrate reinforcement learning (RL) with generative AI models to generate optimal fueling plans in complex and dynamic environments. For example, the present methods, apparatuses, and computer program products may perform RL techniques (e.g., Q-learning, deep-Q networks, proximal policy, optimization, and/or the like) to continuously optimize generative AI models. In this manner, generative AI models may be continuously trained to generate fueling plans configured to reduce GHG emissions and fuel costs while managing limited availability of reduced-emission fuels.

The various embodiments of the disclosure may generate realistic conditional scenarios of travel pathway traversal. For example, the present methods, apparatuses, and computer program products may simulate weather conditions, atmospheric GHG conditions, vehicle traffic conditions, and/or the like, that may be encountered along portions of a travel pathway. In this manner, the various embodiments of the disclosure may evaluate diverse environments and scenarios during training of generative AI models, which may enable more robust fueling plans that are optimized across all and/or most likely conditions. For example, the present methods, apparatuses, and computer program products may generate conditional scenarios comprising different weather patterns, vehicle traffic congestion levels, or fuel availabilities such that generative AI models may utilize diverse knowledge bases in training and live performance. Further, various embodiments of the present disclosure may leverage generative AI models and other techniques to predict future GHG impacts, atmospheric GHG levels, fuel availabilities, and/or the like. In doing so, the model performance and extend the scope and depth of model knowledge bases and improve model accuracy. Other implementations for generative AI-based fuel control will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for optimizing fuel consumption is provided. The computer-implemented method is executable utilizing any of a myriad of computing device(s) and/or combinations of hardware, software, firmware. In some example embodiments an example computer-implemented method includes obtaining travel pathway data for a vehicle, the travel pathway data comprising current environmental data and historical environmental data in accordance with at least a portion of the travel pathway; generating, via a generative artificial intelligence (AI) model, a fueling plan for the vehicle along the at least a portion of the travel pathway based at least in part on the current environmental data and the historical environmental data, wherein: a reward function of the generative AI model is based at least in part on a negative summation of at least one greenhouse emission estimate for the vehicle along the at least a portion of the travel pathway and at least one fuel availability parameter; and executing the fueling plan to control fuel utilized by the vehicle during navigation along the travel pathway.

In some embodiments, the method further comprises in execution of the fueling plan: provisioning to a maintainer of the vehicle a mixing ratio between a first fuel type and a second fuel type to cause fueling of the vehicle based at least in part on the mixing ratio, wherein the second fuel type is associated with reduced greenhouse emission compared to the first fuel type. In some embodiments, the at least one fuel availability parameter comprises at least one of an available volume of the second fuel type or a current cost of the second fuel type. In some embodiments, the generative AI model is configured to: predict a respective greenhouse gas (GHG) impact over the travel pathway pursuant to a plurality of mixing ratio candidates; and determine, as the mixing ratio between the first fuel type and the second fuel type, one of the plurality of mixing ratio candidates that is associated with a minimum predicted GHG impact. In some embodiments, the generative AI is further configured to: predict, in accordance with a respective mixing ratio candidate, a set of GHG impact permutations pursuant to a plurality of condition scenarios along the travel pathway; and determine, as the mixing ratio between the first fuel type and the second fuel type, one of the plurality of mixing ratio candidates that is associated with a minimal set of GHG impact permutations.

In some embodiments, the fueling plan comprises a mixing ratio between a first fuel type and a second fuel type. In some embodiments, the method further comprises, in execution of the fueling plan and in response to the vehicle moving within a proximity of the at least a portion of the travel pathway, combining, aboard the vehicle, respective volumes of the first fuel type and the second fuel type in accordance with the mixing ratio. In some embodiments, the fueling plan indicates an interval along the travel pathway at which to switch active fuel consumption of the vehicle from a first fuel type to a second fuel type, and the second fuel type is associated with reduced greenhouse emission compared to the first fuel type. In some embodiments, the method further comprises, in execution of the fueling plan, causing the vehicle to switch active fuel consumption from the first fuel type to the second fuel type in response to the vehicle traversing to the interval along the travel pathway. In some embodiments, the current environmental data comprises current carbon dioxide concentration along the at least a portion of the travel pathway; the historical environmental data comprises historical carbon dioxide concentration along the at least a portion of the travel pathway; and the fueling plan is configured to reduce emissions of the vehicle along the at least a portion of the travel pathway to maintain the current carbon dioxide concentration within a predetermined range.

In some embodiments, the generative AI model is configured to map the current environmental data to the fueling plan based at least in part on a policy. In some embodiments, the method further comprises performing at least one reinforcement learning technique to generate an optimal iteration of the policy, the optimal iteration of the policy being configured to maximize the reward function of the generative AI model. In some embodiments, the current environmental data comprises at least one weather condition pursuant to the at least a portion of the travel pathway. In some embodiments, the current environmental data indicates respective vehicle traffic in accordance with the at least a portion of the travel pathway. In some embodiments, the fueling plan comprises a mixing ratio between a first fuel type and a second fuel type. In some embodiments, the method further comprises generating the fueling plan as the vehicle traverses the travel pathway. In some embodiments, the method further comprises, in execution of the fueling plan and in response to the vehicle moving within a proximity of the at least a portion of the travel pathway, causing a mixing of respective onboard volumes of the first fuel type and the second fuel type in accordance with the mixing ratio.

In some embodiments, the method further comprises obtaining at least one change to the current environmental data as the vehicle traverses the travel pathway; generating, via the generative AI model, a second fueling plan based at least in part on the at least one change to the current environmental data, the second fueling plan configured to replace the fueling plan and comprising a second mixing ratio between the first fuel type and the second fuel type; and in execution of the second fueling plan and in response to the vehicle moving within a proximity of the at least a portion of the travel pathway, causing a mixing of respective onboard volumes of the first fuel type and the second fuel type in accordance with the second mixing ratio. In some embodiments, the generative AI model comprises at least one neural network. In some embodiments, the at least one neural network comprises a deep Q-network (DQN).

In some embodiments, the historical environmental data comprises:
historical weather data pursuant to the at least a portion of the travel pathway and a current season; and historical GHG concentration pursuant to the at least a portion of the travel pathway. In some embodiments, the method further comprises obtaining at least one measurement of GHG impact pursuant to navigation of the vehicle over the at least a portion of the travel pathway, the navigation occurring in accordance with the fueling plan; and retraining the generative AI model based at least in part on the at least one measurement of GHG impact.

In accordance with another aspect of the present disclosure, a computing apparatus for optimizing fuel consumption is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein. In some embodiments, the vehicle comprises the computing apparatus.

In accordance with another aspect of the present disclosure, a computer program product for optimizing fuel consumption is provided. The computer program product in some embodiments includes at least one non-transitory computer-readable storage medium having computer program code stored thereon. The computer program code in execution with at least one processor is configured for performing any one of the example computer-implemented methods described herein.

## BRIEF DESCRIPTION OF THE DRAWINGS

Having thus described the embodiments of the disclosure in general terms, reference now will be made to the accompanying drawings, which are not necessarily drawn to scale, and wherein:

FIG. 1 illustrates a block diagram of a network environment that may be specially configured within which embodiments of the present disclosure may operate.

FIG. 2 illustrates a block diagram of an example apparatus that may be specially configured in accordance with at least some example embodiments of the present disclosure.

FIG. 3 illustrates an example data architecture in accordance with at least some example embodiments of the present disclosure.

FIG. 4 illustrates an example model architecture for generative AI-based fuel planning in accordance with at least some example embodiments of the present disclosure.

FIG. 5 shows an example reinforcement learning workflow 500 in accordance with at least some example embodiments of the present disclosure;

FIG. 6 illustrates an example vehicle in which generative AI-based fuel planning may be implemented in accordance with at least some example embodiments of the present disclosure.

FIG. 7 illustrates an example vehicle in which generative AI-based fuel planning may be implemented in accordance with at least some example embodiments of the present disclosure.

FIG. 8 illustrates a flowchart depicting operations of an example process for performing generative AI-based fuel planning in accordance with at least some example embodiments of the present disclosure.

## DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of generating fuel planning strategies to reduce GHG impacts of a vehicle. Vehicle-related industries (e.g., aviation, automotives, locomotives, maritime, and/or the like) may demonstrate a significant impact on GHG emissions and planetary warming effects due to the burning of fossil fuels, which release carbon dioxide and other GHGs into the atmosphere. The use of reduced-emission fuels as an alternative to or in combination with conventional fossil fuels may reduce GHG impacts; however, reduced-emission fuels may demonstrate increased costs and lesser availability. For example, reduced-emission fuels in the aviation industry (e.g., SAFs, and/or the like) are typically associated with limited production capacity, high production cost, heavy competition for feedstocks, regulatory and policy barriers, and lack of supporting infrastructure at fueling sites, such as airports. As a result, the generation of effective fueling strategies for integrating reduced-emission fuels may face challenges in optimally balancing GHG impact reduction with constraints of fuel availability and cost.

Embodiments of the present disclosure overcome the technical challenges of generating optimal fueling plans for reduced-emission and conventional fossil fuels by providing generative AI models configured to predict GHG impacts and generate optimal actions for controlling the type or composition of fuel utilized by the vehicle along various portions of a travel pathway. For example, the fueling plan may indicate optimal compositions of fuel mixtures that may be utilized by a vehicle while traversing travel pathway portions. As another example, the fueling plan may indicate intervals along the travel pathway at which the fuel being consumed by the vehicle may be switched between conventional fossil fuel types and reduced-emission types. In various embodiments, the dynamic use of reduced-emission fuel based at least in part on real-time GHG emission predictions may significantly reduce the carbon footprint and other GHG impacts of vehicle-prevalent industries. For example, in an aerial context, by optimizing the proportion of SAF usage before and during flights, based on route-specific and real-time emission data, the methods, apparatuses, and computer program products may enable the aviation industry to overcome the challenges of limited SAF production capacity, high costs, and competition for feedstocks, while simultaneously satisfying goals for carbon-neutral growth.

In various embodiments, the present methods, apparatuses, and computer program products apply generative AI models and reinforcement learning techniques to generate optimal fueling plans. In doing so, the methods, apparatuses and computer program products may adapt in real-time to volatile variables (e.g., weather, air traffic) and provide more precise and efficient fuel optimization strategies. In various embodiments, the generative AI models are configured to forecast future condition scenarios based at least in part on historical data, which may enable generation of more accurate pre-traversal and para-traversal fueling strategies. For example, in an aerial context, the generative AI model may generate and simulate multiple flight scenarios to ensure the optimal SAF mixture is used for the various potential conditions, which may reduce a risk of fuel inefficiencies. The present methods, apparatuses, and computer program products may train the generative AI models via reinforcement learning and continued assessments of vehicle performance, environmental effects, and GHG data to increase predictive accuracy and further optimize fueling plans for emissions reduction.

In some embodiments, the present methods, apparatuses, and computer program products generate, via generative AI models, a fueling plan comprising an optimal mixing ratio by which a mixture of reduced-emission and fossil fuels may be produced. In this manner, the vehicle may be fueled pre-egress with a fueling mixture configured to optimize GHG impacts along the travel pathway. As another example, the generative AI model may produce one or more mixing ratios for adjusting the proportion of reduced-emission and fossil fuel consumed by the vehicle over the course of traversing the travel pathway. In this manner, the present methods, apparatuses, and computer program products may perform live assessments of GHG impact and dynamically adjust the fractions of reduced-emission and fossil fuels in a fuel mixture consumed by the vehicle. As another example, the present methods, apparatuses, and computer program products may generate switch intervals indicative of times or distances along the travel pathway at which to switch active fuel consumption of the vehicle from fossil fuel to reduced-emission fuel to minimize GHG impacts in portions of the travel pathway. By these techniques, the various embodiments may reduce GHG emissions of the vehicle along subsets of a travel pathway in which the emission impact more severe, such as areas in which atmospheric GHG concentrations are already excessive.

## Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Generative artificial intelligence (AI) model" refers to any algorithmic and/or machine learning model that generates text, images, videos, or other data based at least in part on one or more instructions provided in a natural language format. In some embodiments, a generative AI model includes one or more large language models (LLMs) including autoregressive language models, autoencoding language models, and/or the like. Additionally, or alternatively, in some embodiments, a generative AI model comprises an architecture based at least in part on generative adversarial networks (GANs), variational autoencoders (VAEs), autoregressive models, recurrent neural networks (RNNs), deep neural networks (DNNs), transformers, image generators, and/or the like.

"Greenhouse gas" (GHG) refers to any gas or vapor that contributes to the planetary warming by absorbing infrared radiation. For example, GHGs may include carbon dioxide, methane, nitrous oxide, hydrofluorocarbons (HFCs), perfluorocarbons (PFCs), sulfur hexafluoride, nitrogen trifluoride, ozone, and water vapor. The consumption (e.g., burning or other reaction) of fossil fuel by a vehicle may cause emission of one or more GHGs into the atmosphere.

"GHG impact" refers to effects of fuel consumption by a vehicle pursuant to planetary warming. For example, GHG impact may include an amount of one or more GHGs emitted by a vehicle. As another example, GHG impact may include a change to atmospheric GHG concentration that occurs due at least in part to emission of one or more GHGs by a vehicle.

"Fossil fuel" refers to any carbon compound- or hydrocarbon-containing material that may be utilized to provide power to a vehicle or vehicle system. For example, fossil fuels may include petroleum or petroleum products (e.g., kerosene, gasoline, butane, fuel oil, and/or the like) coal-derived products, natural gas, and derived gas. In an aerial context, fossil fuels may include Jet A, Jet A-1, Jet B, TS-1, and/or the like. As used herein, "fossil fuel" or "conventional fossil fuel" may be used to refer to any carbon compound- or hydrocarbon-containing material that may be reacted to power a vehicle and which has not been optimized to reduce emissions resulting from such vehicle powering processes.

"Reduced-emission fuel" refers to any fuel that has been optimized to demonstrate a lesser rate or amount of GHG emissions as compared to conventional fossil fuels. For example, reduced-emission fuels may include biofuels (e.g., biodiesel, sustainable aviation fuel (SAF), alternative jet fuel (JAF), and/or the like), ethanol, synthetic engineered fuels, and/or the like. In some embodiments, reduced-emission fuels may be derived from biomass feedstocks including corn grain, oil seeds, algae, food production-derived fats, oils, and greases, agricultural residues, forestry residues, wood mill waste, wet wastes (e.g., manures, wastewater treatment sludge, and/or the like), municipal solid waste streams, and/or the like.

"Fueling plan" refers to any representation of executable instructions for controlling fuel utilized by a vehicle as the vehicle traverse a travel pathway. For example, a fueling plan may include executable program code, electrical signals, and/or the like, by which types and compositions of fuel supplied to the vehicle may be controlled. As another example, a fueling plan may include an electronic communication, such as a digital instant message, electronic mail, push alert, notification, digital report, and/or the like, which may be provisioned to a computing device of a vehicle owner, vehicle maintainer, vehicle operator, and/or the like.

## Example Systems **and Apparatuses of the Disclosure**

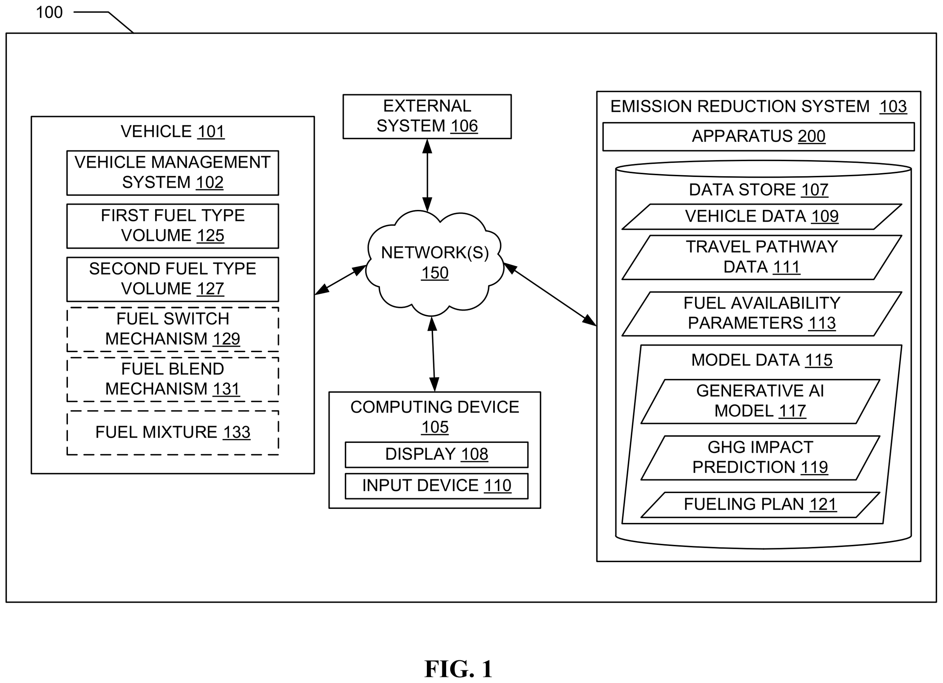

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, an emission reduction system 103, one or more computing devices 105, one or more external systems 106, and/or the like.

In various embodiments, the emission reduction system 103 includes an apparatus 200 configured to perform various functions and actions related to enacting techniques and processes described herein for generating fueling plans 121 via one or more generative AI models 117. In some embodiments, the emission reduction system 103 is external to the vehicle 101. For example, the emission reduction system 103 may include one or more computing resources, embodied in hardware, software, firmware, and/or the like, that are remote from the vehicle 101. Alternatively, in some embodiments, the vehicle 101 comprises the emission reduction system 103. For example, the emission reduction system 103 may include one or more computing resources, embodied in hardware, software, firmware, and/or the like, aboard the vehicle 101. In some embodiments, the emission reduction system 103 includes a first set of computing resources aboard the vehicle 101 and a second set of computing resources external to the vehicle 101. For example, the emission reduction system 103 may include a set of computing resources external to the vehicle 101 and configured to perform processes to train a generative AI model 117. In such context, the emission reduction system 103 may include a second set of computing resources configured to execute the trained generative AI model 117 to generate fueling plans 121 before and/or during traversal of a travel pathway.

In various embodiments, the vehicle 101 includes a vehicle management system 102, a first fuel type volume 125, and a second fuel type volume 127. In some embodiments, the first fuel type volume 125 includes one or more conventional fossil fuels. For example, the first fuel type volume 125 may include Jet A, Jet A1, Jet B, and/or the like. In some embodiments, the second fuel type volume 127 includes one or more fuels associated with reduced GHG emission as compared to fuels of the first type. For example, the second type fuel volume 127 may include one or more sustainable aviation fuels (SFAs), such as synthetic paraffinic kerosene (SPK), SPK with aromatics, hydroprocessed esters and fatty acids, hydrocarbon-hydroprocessed esters and fatty acids, hydroprocessed fermented sugars to synthetic isoparaffins, catalytic hydrothermolysis synthesized kerosene, fats, oils, and greases (FOG)-derived fuel, and/or the like.

In some embodiments, the vehicle 101 includes a fuel mixture 133 that includes a fractional blend of one or more conventional fossil fuels and one or more fuels associated with reduced GHG emission. For example, the fuel mixture 133 may include a blended mixture of respective fuels from the first fuel type volume 125 and the second fuel type volume 127. In such contexts, the fuel mixture 133 may be generated by means located onboard the vehicle 101 and while the vehicle 101 is in motion or static. Alternatively, or additionally, the fuel mixture 133 may be generated offboard the vehicle 101 by a maintainer of the vehicle 101 (e.g., in accordance with a fueling plan 121 provided to the maintainer). In such contexts, the vehicle 101 may receive the fuel mixture 133 via one or more fueling processes. In some embodiments, the vehicle 101 comprises one or more volumes of the fuel mixture 133 and excludes separate volumes of the first fuel type and second fuel type.

In some embodiments, the vehicle 101 includes one or more fuel switch mechanisms 129 configured to switch active fuel consumption of the vehicle from a first fuel type to a second fuel type, and vice versa. For example, the fuel switch mechanism 129 may be configured to cause one or more engines of the vehicle 101 to switch active fuel consumption from the first fuel type volume 125 to the second fuel type volume 127 in accordance with a fueling plan 121. Additionally, or alternatively, in some embodiments, the vehicle 101 includes one or more fuel blend mechanisms 131 configured to combine respective portions of the first fuel type volume 125 and second fuel type volume 127 to generate a fuel mixture 133 in accordance with a fueling plan 121. In various embodiments, the emission reduction system 103 is configured to active fuel switch mechanisms, fuel blend mechanisms, and/or the like, to control fuel utilized by the vehicle 101 during navigation along a travel pathway.

In some embodiments, the vehicle management system 102 is configured to generate or obtain vehicle data 109 that is indicative of operation of the vehicle 101. Additionally, in some embodiments, the vehicle management system 102 is configured to control the vehicle 101. The vehicle management system 102 may include any number of computing device(s) and/or other system(s) embodied in hardware, software, firmware, and/or the like. For example, the vehicle management system 102 may include one or more vehicle controls (e.g., rotor speed, rotor orientation, thrust, brakes, flaps, and/or the like). In some embodiments, the vehicle management system 102 includes one or more vehicle recording systems configured to obtain and record one or more aspects of the vehicle or operation thereof. For example, the vehicle management system 102 may include a transponder, data uplink system, traffic collision avoidance system (TCAS), automatic dependent surveillance-broadcast (ADS-B), flight recorder, and/or the like. The vehicle data 109 obtained by the vehicle management system 102 may be accessible to the emission reduction system 103 and stored in one or more data stores 107. In some embodiments, the vehicle management system 102 includes or is in communication with one or more sensors of the vehicle 101. For example, the vehicle management system 102 may include or communicate with image sensors, altitude sensors, pressure sensors, temperature sensors, audio sensors, accelerometers, gyroscopes, magnetometers, inertial measurement units, and/or the like.

In various embodiments, the vehicle management system 102 includes one or more sensors, systems, and/or the like configured to determine a physical position of the vehicle 101. For example, the vehicle management system 102 may include one or more satellite-based positioning systems configured to generate a geographic orientation of a vehicle, such as a global position system (GPS) module. In some embodiments, the vehicle management system 102 and/or apparatus 200 is/are configured to obtain and store vehicle data 109, travel pathway data 111, fuel availability parameters 113, model data 115, and/or the like, and store the data in one or more data stores 107. For example, the vehicle management system 102, apparatus 200, and/or the like may store travel pathway information, weather reports, fuel costs, atmospheric GHG concentration measurements, and/or the like at the data store 107 such that a generative AI model may draw upon the data as a knowledge base.

In some embodiments, the computing device 105 is associated with a vehicle operator, a vehicle maintainer, and/or the like. For example, the computing device 105 may be associated with a vehicle maintainer responsible for fueling the vehicle in advance of the vehicle traversing a travel pathway. As another example, the computing device 105 may be associated with a vehicle operator responsible for navigating the vehicle 101 along the travel pathway and enacting fueling strategies to minimize GHG impact of the vehicle 101 along one or more portions of the travel pathway. In various embodiments, the computing device 105 includes one or more displays 108. In some embodiments, the display 108 includes a CRT (cathode ray tube), LCD (liquid crystal display) monitor, LED (light-emitting diode) monitor, and/or the like, for displaying information/data to an operator or maintainer of the vehicle 101. In various embodiments, graphical user interfaces (GUIs) and visual representations related to fueling plans are rendered on the display 108.

In some embodiments, the computing device 105 includes one or more input devices 110 configured to receive user inputs. For example, the input device 110 may receive user selections for defining fuel availability parameters 113, travel pathway data 111, or vehicle data 109. As another example, the input device 110 may receive user selections for approving implementation of a fueling plan 121, including activation of fuel switch mechanisms 129, fuel blend mechanisms 131, and/or the like. The input device 110 may include any number of devices that enable HMI between a vehicle operator, the vehicle management system 102, the apparatus 200, and/or the like. In some embodiments, the input device 110 includes one or more buttons, cursor devices, joysticks, touch screens, including three-dimensional or pressure-based touch screens, camera, finger-print scanners, accelerometer, retinal scanner, gyroscope, magnetometer, or other input devices. For example, the input device 110 may include a touchscreen by which a vehicle operator may provide user inputs for requesting fueling plans 121, GHG impact predictions 119, and/or the like, from the apparatus 200. In some embodiments, the input device 110 includes one or more vehicle controls (e.g., joysticks, thumbsticks, yokes, steering wheels, accelerator control, thrust control, brake control, and/or the like) that enable an operator to control and navigate the vehicle 101.

In some embodiments, the external system 106 includes any number of services, platforms, and/or the like that provide data to the emission reduction system 103, vehicle 101, and/or the like. In such contexts, the provided data may be utilized as input to generative AI-based processes for predicting GHG impacts and generating fueling plans configured to minimize GHG impact of the vehicle 101. In some embodiments, the apparatus 200 is configured to receive vehicle data 109, travel pathway data 111, fuel availability parameters 113, and/or the like, from one or more external systems 106 (e.g., weather reporting services, vehicle traffic services, vehicle alert services, maintenance services, and/or the like). In some embodiments, external systems 106 include weather forecasting or reporting services, vehicle traffic monitoring services, environmental monitoring services (e.g., atmospheric quality monitoring platforms, systems, and/or the like), fueling services, and/or the like. For example, the external system 106 may include a weather service configured to provision historical and real-time weather conditions, wind patterns, and/or the like to the apparatus 200, vehicle management system 102, and/or the like. As another example, the external system 106 may include an environmental monitoring service configured to provision historical and current atmospheric GHG concentrations to the apparatus 200. As another example, the external system 106 may include a vehicle mission scheduling system configured to provision travel pathway data 111 to the apparatus 200. As another example, the external system 106 may include an airport operator, fueling station operator, merchant, and/or the like that provides fuel reports indicative of available fuel volumes, fuel costs, and/or the like. In another example, the external system 106 may be associated with a territorial authority such that the external system 106 may provision regulatory requirements, territory restrictions, and/or the like to the apparatus 200.

In various embodiments, the emission reduction system 103 includes one or more data stores 107. The various data in the data store 107 may be accessible to one or more of the apparatus 200, the vehicle management system 102, the computing device 105, and/or the like. The data store 107 may be representative of a plurality of data stores 107 as can be appreciated. The data stored in the data store 107, for example, is associated with the operation of the various applications, apparatuses, and/or functional entities described herein. The data stored in the data store 107 may include, for example, vehicle data 109, travel pathway data 111, fuel availability parameters 113, model data 115, and/or the like.

In various embodiments, vehicle data 109 includes any data associated with the operator or operation of the vehicle 101. In some embodiments, the vehicle data 109 includes readings from one or more sensors or systems aboard the vehicle 101. For example, the vehicle data 109 may include vehicle type, vehicle model, fuel capacity, fuel tank specification, engine specification, emission rating, and/or the like. As another example, the vehicle data 109 may include temperatures, pressures, humidity levels, oxygen levels, carbon dioxide levels, and/or the like of the vehicle exterior or vehicle interior. As another example, the vehicle data 109 may include images, videos, audio recordings, and/or the like of the vehicle exterior or vehicle interior. As another example, the vehicle data 109 may include measurements of vehicle speed, acceleration, ascension, descension, pitch, turning rate, bank angle, and/or the like. In some embodiments, vehicle data 109 includes a metric of difference between a sensor measurement and a predetermined threshold, such as a target value, target range, limit, and/or the like. In some embodiments, vehicle data 109 includes a physical location of the vehicle 101, an altitude of the vehicle 101, a proximity of the vehicle 101 to one or more locations (e.g., destinations, territorial boundaries), and/or the like.

In some embodiments, travel pathway data 111 includes data associated with a course of travel for a vehicle 101 (e.g., referred to as a "travel pathway"). In some embodiments, travel pathway data 111 includes travel origins, destinations, routes between travel origins and destinations, total travel distances, and/or the like. For example, in an aerial context, the travel pathway data 111 may include a flight path between airports. In some embodiments, travel pathway data 111 and/or vehicle data 109 includes a phase or progression of the vehicle 101 along a travel pathway. For example, the travel pathway data 111 may include indications that the vehicle 101 is at stages of taxi, takeoff, ascent, cruising, pre-descent, descent, landing, arrival, and/or the like. In some embodiments, the travel pathway data 111 includes altitudes, routes, and/or the like at or along which the vehicle 101 will operate. For example, in an aerial context, the travel pathway data 111 may include a respective cruising altitude of the vehicle for a plurality of portions of the travel pathway.

In some embodiments, the travel pathway data 111, vehicle data 109, and/or the like include a volume of fuel required to traverse the travel pathway and/or comply with one or more regulations. In some embodiments, the travel pathway data 111 includes respective regulations pursuant to portions of the travel pathway. For example, the travel pathway data 111 may include maximum emission standards as set forth by a regulatory agency, a vehicle owner, and/or the like. In some embodiments, the travel pathway data 111 includes one or more parameters indicative of acceptable fuel cost, engine efficiency, travel duration, and/or the like. In some embodiments, the travel pathway data 111 includes historical, current, and/or forecasted vehicle traffic data for the travel pathway. For example, the vehicle traffic data may include forecasted vehicle traffic density, overall emissions, and/or the like in accordance with a portion of the travel pathway.

In some embodiments, the travel pathway data 111 includes data associated with one or more environments through which the vehicle 101 may traverse in accordance with a travel pathway. For example, the travel pathway data 111 may include historical, current, or forecasted weather conditions, wind patterns, and/or the like, in accordance with one or more portions of the travel pathway. As another example the travel pathway data 111 may include historical, current, and/or forecasted GHG concentration levels pursuant to a plurality of portions of the travel pathway. In some embodiments, the travel pathway data 111 includes historical fuel consumption of the vehicle 101 in accordance with one or more previously traversed travel pathways. In some embodiments, the travel pathway data 111 includes historical GHG emission levels, GHG impacts, and/or the like of the vehicle 101. For example, the travel pathway data 111 may include historical GHG emission levels and impacts of the vehicle 101 pursuant to a travel pathway, fuel type, mixing ratio, switch interval, and/or the like.

In some embodiments, fuel availability parameters 113 include data associated with fossil fuels, reduced-emission fuels, and/or the like, that may be consumed by the vehicle 101. In some embodiments, fuel availability parameters 113 includes respective costs of fossil fuels, reduced-emissions fuels, and/or the like. The cost may be a global, regional, or location-specific cost. For example, the cost may be associated with an origin or destination of the vehicle 101, such as an airport. In some embodiments, fuel availability parameters 113 include respective volumes of fossil fuels, reduced-emissions fuels, and/or the like, that may be obtained at a location. In some embodiments, fuel availability parameters 113 include respective emission factors of fossil fuels, reduced-emission fuels, and/or the like. An emission factor may indicate a quantity of GHG emitted per unit of the fuel consumed. For example, an emission factor may indicate a mass of carbon dioxide emitted per liter of fuel burned.

In some embodiments, model data 115 includes data that defines one or more generative AI models 117. For example, the model data 115 may include data that defines autoregressive language models, autoencoding language models, GANs, VAEs, autoregressive models, RNNs, DNNs, transformers, image generators, and/or the like. In some embodiments, the model data 115 includes data for training a generative AI model to perform a task. For example, the model data 115 may include one or more knowledge bases comprising weather documentation, vehicle documentation, greenhouse data, travel pathway documentation, and/or the like by which a generative AI model 117 may be trained to generate GHG impact predictions 119, fueling plans 121, and/or the like. The knowledge bases of the generative AI models 117 may comprise current and historical vehicle data 109, travel pathway data 111, fuel availability parameters 113, GHG impact predictions 119, measured GHG impacts, fueling plans 121, and/or the like. In some embodiments, the model data 115 includes thresholds or other criteria by which performance and stability of the generative AI model 117 may be evaluated. For example, the model data 115 may include thresholds for model prediction accuracy, precision, fitting, and/or the like. In various embodiments, the model data 115 includes adjustable model settings or parameters.

In some embodiments, model data 115 includes GHG impact predictions 119, fueling plans 121, and/or the like, which may be generated by one or more generative AI models 117. In various embodiments, a respective GHG impact prediction 119 comprises an estimated emission of one or more GHGs by a vehicle 101 as the vehicle 101 traverses one or more portions of a travel pathway. For example, a GHG impact prediction 119 may include an estimated amount of carbon dioxide emitted by the vehicle 101 as the vehicle 101 traverses a portion of a travel pathway and in accordance with one or more fuel types, fuel mixtures, and/or the like. Additionally, or alternatively, in some embodiments, the GHG impact prediction 119 includes an estimated change to atmospheric concentration of one or more GHGs in a geographic region as the vehicle 101 traverses one or more portions of the travel pathway. For example, the GHG impact prediction 119 may include an estimated increase to atmospheric concentration of carbon dioxide in a region due to the vehicle 101 burning a quantity of fuel (or fuel mixture 133) while traversing through the region.

In some embodiments, the fueling plan 121 includes one or more actions that may be implemented to control fuel utilized the vehicle 101 as the vehicle 101 traverses one or more portions of a travel pathway. In some embodiments, a fueling plan 121 is configured to be performed prior to the vehicle 101 traversing the travel pathway. For example, in an aerial context, a fueling plan 121 may include a mixing ratio for producing a blend of Jet A1 and SAF at an airport such that the vehicle 101 may be fueled using the blend prior to departure. Alternatively, or additionally, in some embodiments, a fueling plan 121 is configured to be performed as the vehicle 101 traverses one or more portions of a travel pathway. For example, a fueling plan 121 may include a switch interval indicative of a time or milestone along the travel pathway at which to transition active fuel consumption of the vehicle 101 from a first fuel type volume 125 (e.g., a conventional fossil fuel) to a second fuel type volume 127 (e.g., a fuel with reduced emissions as compared to the conventional fossil fuel). As another example, a fueling plan 121 may include a mixing ratio for producing a fuel mixture 133 mid-traversal (e.g., via blending of proportions of fuel from the first fuel type volume 125 and second fuel type volume 127).

In some embodiments, a fueling plan 121 is associated with one or multiple portions of the travel pathway and may include multiple mixing ratios, switch intervals, and/or the like, pursuant to respective subsets of the travel pathway. In some embodiments, a fueling plan 121 includes metadata including a timestamp at which to perform the fueling plan 121, a location at which to perform the fueling plan 121, a time of year associated with the fueling plan 121 (e.g., season, month, day, time of day, or other period), and/or the like. In some embodiments, the metadata includes a GHG impact prediction 119 (e.g., net benefit of performing the fueling plan 121), an estimated resource cost of performing the fueling plan (e.g., fuel costs, amount of fuel consumed, and/or the like), an estimated vehicle efficiency impact of performing the fueling plan, and/or the like.

In some embodiments, the generative AI model 117 is configured to generate a fueling plan 121 comprising an optimal mixing ratio for a fuel mixture of fossil fuel and reduced-emission fuel. In this manner, the apparatus 200 may ensure optimal pre-traversal or intra-traversal fueling decisions that account for both environmental and resource constraints. In some embodiments, the generative AI model 117 is trained to generate an optimal mixing ratio (e.g., proportion of reduced-emission fuel in a fuel mixture) based at least in part on current and historical weather conditions, vehicle traffic data, GHG emissions and atmospheric concentrations, vehicle fuel efficiencies, and/or the like. In various embodiments, the generative AI model 117 is configured to perform predictive fuel modeling including forecasting the GHG impact of different fuel mixtures for traversing a travel pathway or portion thereof. For example, in aerial context, the generative AI model 117 may predict the GHG impact of respective mixing ratio candidates on GHG impact along a flight path based at least in part on weather conditions, altitude, traffic congestion, environmental sensitivity (e.g., volatility or resistivity to GHG concentration change, environmental regulations for maximum GHG emission or concentration, and/or the like). In some embodiments, the generative AI model 117 is configured to predict a respective GHG impact over the travel pathway pursuant to a plurality of mixing ratio candidates. The GHG impact may include total emissions, forecasted changes to atmospheric GHG concentration, and/or the like. In some embodiments, the generative AI model 117 is configured to determine a final proposed mixing ratio based at least in part on one of the plurality of mixing ratio candidates that is associated with a minimum predicted GHG impact.

In some embodiments, the generative AI model 117 is configured to generate condition scenarios such that GHG impact predictions may be generated in accordance with various scenarios of travel pathway traversal. The condition scenarios may include different weather conditions, vehicle traffic patterns, atmospheric GHG concentration levels, and/or the like. In some embodiments, the generative AI model 117 is configured to predict, in accordance with a respective mixing ratio candidate, a set of GHG impact permutations pursuant to a plurality of condition scenarios along the travel pathway. In some embodiments, the generative AI model is configured to determine, as the final proposed mixing ratio one of the plurality of mixing ratio candidates that is associated with a minimal set of GHG impact permutations. For example, in an aerial context, the generative AI model 117 may generate multiple flight scenarios and simulate the optimal fuel mixture proportion that minimizes the GHG emissions of the vehicle 101 across all possible conditions, or a subset of conditions that are most likely to occur in accordance with the date of the travel pathway traversal.

In some embodiments, the generative AI model 117 is configured to continuously analyze real-time travel pathway data and environmental factors as the vehicle 101 traverses the travel pathway. In this manner, the apparatus 200 may update the mixing ratio such that the composition of the fuel mixture consumed by the vehicle 101 may be dynamically adjusted as conditions change along the portions of the travel pathway. For example, the generative AI model 117 may predict one or more approaching travel pathway portions that embody emission hotspots or areas of high environmental sensitivity (e.g., regions with strict emission regulations) based on at least in part on the travel pathway and real-time environmental data associated therewith.

Alternatively, the active fuel consumption of the vehicle 101 may be switched between fuel types in accordance with the changing travel pathway conditions and current and predicted GHG impact along the travel pathway. For example, the generative AI model 117 may generate switch intervals for upcoming portions of the travel pathway based at least in part on real-time weather conditions, GHG concentrations, vehicle traffic, and/or the like. In an aerial context, the generative AI model 117 may predict that the aerial vehicle will enter an emission-sensitive zone, and, in response, generate a proposed interval for switching from fossil fuel to reduced-emissions fuel in accordance with traversing the travel pathway portion comprising the emission-sensitive zone.

In some embodiments, the generative AI model 117 is configured to predict portions of a travel pathway in which a higher proportion of reduced-emissions fuel in the fuel mixture may achieve the greatest emission-reducing impact. For example, in an aerial context, the generative AI model 117 may predict that a higher proportion of reduced-emission fuel demonstrates demonstrate a greatest benefit on GHG impact when implemented in accordance with takeoff, landing, or flight through environmentally regulated areas. In such contexts, the generative AI model 117 may dynamically update the mixing ratio to cause real-time adjustment of the fuel mixture consumed by the vehicle 101 in accordance with the predicted benefits on GHG impact.

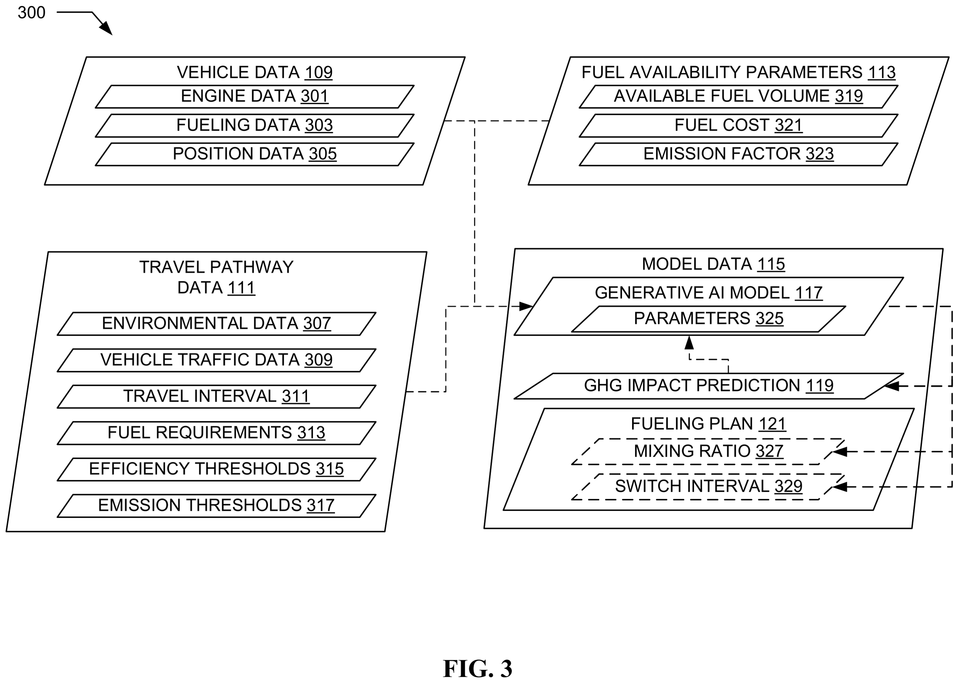

Additional example aspects of the vehicle data 109, travel pathway data 111, fuel availability parameters 113, and model data 115 are shown in the data architecture 300 depicted in FIG. 3 and described herein.

In various embodiments, the apparatus 200 is configured to instruct a generative AI model 117 to generate a predictive output including GHG impact predictions 119, fueling plans 121, and/or the like. For example, the apparatus 200 may generate a GHG impact prediction 119 based at least in part on a condition scenario defined by vehicle data 109, travel pathway data 111, fuel availability parameters 113, and/or the like. The apparatus 200 may generate a fueling plan 121 based at least in part on the GHG impact prediction 119 and in accordance with the conditional scenario, where the fueling plan 121 is configured to reduce or minimize the predicted GHG impact of the vehicle 101.

In some embodiments, the apparatus 200 is configured to obtain vehicle data 109, travel pathway data 111, fuel availability parameters 113, model data *115,* and/or the like, from vehicles 101, computing devices 105, external systems 106, other emission reduction systems, and/or the like. For example, the apparatus 200 may receive a travel pathway from a vehicle management system 102. As another example, the apparatus 200 may receive from a weather monitoring service and/or emissions tracking service respective environmental data associated with one or more portions of a travel pathway. As another example the apparatus 200 may receive available fuel volumes, fuel costs, and/or the like from a fuel merchant, airport service, and/or the like. In various embodiments, the apparatus 200 is configured to obtain such data in substantially real-time as the vehicle 101 traverses the travel pathway.

In some embodiments, the apparatus 200 is configured to obtain measurements of actual GHG impact as the vehicle 101 traverses a portion of a travel pathway or following traversal of the portion. For example, the apparatus 200 may obtain one or more measurements of GHG impact pursuant to navigation of the vehicle 101 over one or more portions of the travel pathway (e.g., the navigation occurring in accordance with the fueling plan). In some embodiments, the apparatus 200 is configured to train and update the generative AI model 117 base at least in part on the measurements of actual GHG impact. Further, the apparatus 200 may continuously train and update the generative AI model 117 based at least in part on real-time updates of fuel availability parameters 113, environmental data 307 (FIG. 3), and/or the like.

In various embodiments, the apparatus 200 is configured to cause performance of a fueling plan 121. For example, the apparatus 200 may provision a fueling plan 121 to a computing device 105 associated with a maintainer of the vehicle 101 to cause the vehicle 101 to be fueled with a fuel mixture 133 in accordance with a mixing ratio. The fueling plan 121 may be rendered on a display 108 of the computing device 105, such as in the form of a graphical user interface (GUI). As another example, the apparatus 200 may control fuel switch mechanisms 129, fuel blend mechanisms 131, and/or the like aboard the vehicle 101 to control active fuel consumption of the vehicle 101 as the vehicle 101 traverses the travel pathway. Alternatively, or additionally, the apparatus 200 may provision a fueling plan 121 to the vehicle management system 102 to cause the vehicle management system 102 to perform the fueling plan 121 or cause rendering of the fueling plan 121 on one or more displays such that a vehicle operator may access, view, adjust, and/or approve the fueling plan 121.

In some embodiments, the apparatus 200 is configured to determine a location of the vehicle 101 in accordance with a travel pathway or portions of the travel pathway. For example, the apparatus 200 may obtain vehicle data 109 comprising a current geographical location, altitude, speed, and/or the like of the vehicle 101. The apparatus 200 may determine whether the vehicle 101 has traversed or is within a threshold range of traversing one of a plurality of portions of the travel pathway (e.g., a positive determination causing the apparatus 200 to initiate performance of a fueling plan 121 pursuant to minimizing GHG impact of the vehicle 101 along the portion).

In some embodiments, the apparatus 200 is configured to monitor for changes to vehicle data 109, travel pathway data 111 (e.g., including environmental data 307, see FIG. 3), fuel availability parameters 113, and/or the like. For example, the apparatus 200 may obtain current environmental data associated with a portion of a travel pathway yet to be traversed by a vehicle 101. The current environmental data may include a change to atmospheric GHG concentration, weather, temperature, and/or the like. In some embodiments, the apparatus 200 causes the generative AI model 117 to generate a second fueling plan 121, or update an existing fueling plan 121, based at least in part on the detected changes. The second fueling plan 121 (or updated fueling plan 121) may be configured to replace a previously generated fueling plan 121. For example, the second fueling plan 121 may include a second mixing ratio configured to replace a first mixing ratio. As another example, the second fueling plan 121 may include an addition, removal, or adjustment of a switch interval.

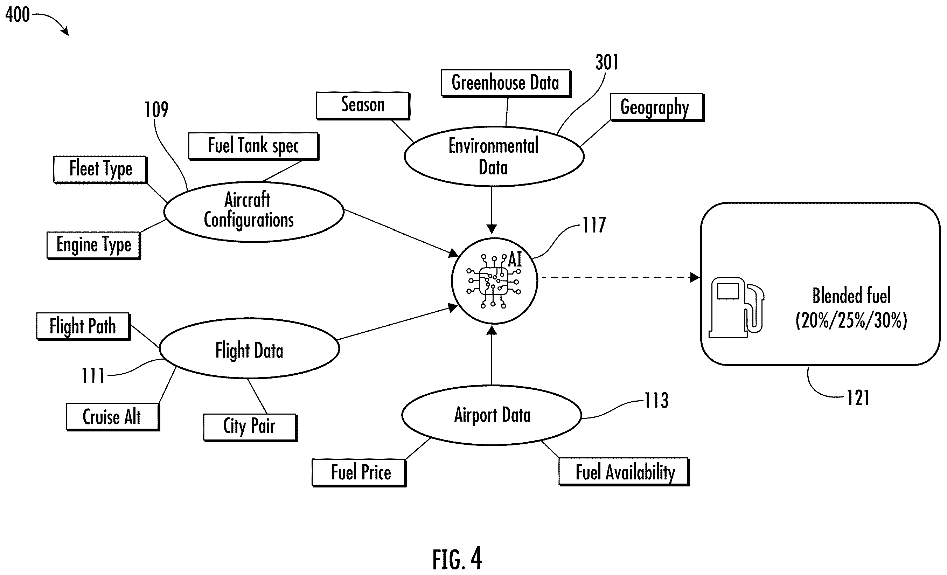

Additional example functionality, workflows, and processes of the apparatus 200 are shown in the diagrams, workflows, and processes depicted in FIGS. 4-8 and described herein.

In some embodiments, the apparatus 200, vehicle management system 102, computing device 105, external system 106, and/or the like, are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200, the vehicle management system 102, the computing device 105, the external system 106, and/or the like. For example, the apparatus 200 may provision fueling plans 121 and receive data via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

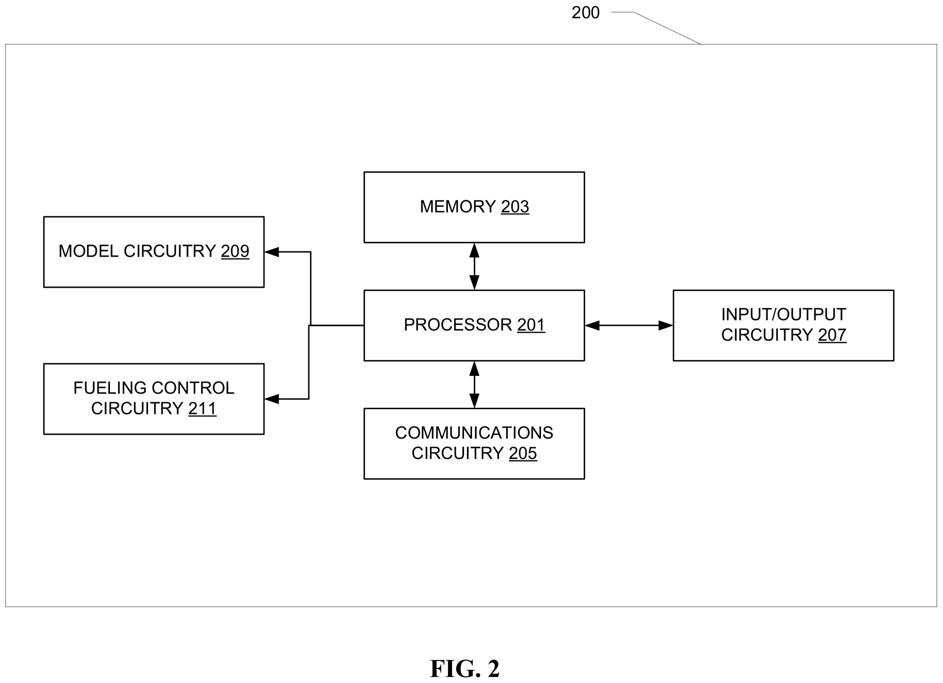

FIG. 2 illustrates a block diagram of an example apparatus 200 that may be specially configured in accordance with at least some example embodiments of the present disclosure. The apparatus 200 may carry out functionality and processes described herein to reduce GHG impact of a vehicle via generation of fueling plans by generative AI models. In some embodiments, the apparatus 200 includes a processor 201, memory 203, communications circuitry 205, input/output circuitry 207, model circuitry 209, and fueling control circuitry 211. In some embodiments, the apparatus 200 is configured, using one or more of the processor 201, memory 203, communications circuitry 205, input/output circuitry 207, model circuitry 209, and/or fueling control circuitry 211 to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., generating condition scenarios, predicting GHG emissions and impacts, generating fueling plans, causing performance of fueling plans, and/or the like). In some embodiments, the memory 203 is embodied as a data store 107 as shown in FIG. 1 and described herein. In some embodiments, the memory 203 includes vehicle data 109, travel pathway data 111, fuel availability parameters 113, model data *115,* and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with providing generating fueling plans 121. In some embodiments, the processor 201 includes hardware, software, firmware, and/or the like, that obtain vehicle data, travel pathway data, fuel availability parameters, and/or the like, from vehicle management systems 102, external systems 106, computing devices 105, and/or the like. For example, the processor 201 may obtain environmental data from one or more weather services, vehicle sensors, device-uploaded documents, and/or the like. As another example, the processor 201 may obtain vehicle data, travel pathway data, and/or the like, from the vehicle management system 102, one or more external systems 106, and/or the like. In some embodiments, the processor 201 includes hardware, software, firmware, and/or the like, that receive model data from a computing environment external to the vehicle 101.

In some embodiments, the apparatus 200 includes input/output circuitry 207 that provides output to a user and, in some embodiments, receives an indication of a user input. In various embodiments, the user is an operator of a vehicle 101, where the operator may be aboard the vehicle 101. For example, in some contexts, the input/output circuitry 207 provides output to and receives input from one or more interfaces aboard the vehicle 101, such as input devices, displays, audio input/output devices, and/or the like. In some embodiments, the user is a maintainer of the vehicle 101, where the maintainer may be external from the vehicle 101. For example, in some contexts, the input/output circuitry 207 provides output to and receives input from a computing device 105 of a vehicle maintainer.

In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display, audio input/output device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from vehicle management systems 102, computing devices 105, and external systems 106 in communication with the apparatus 200. For example, the communications circuitry 205 may enable receipt of environmental data, fuel availability parameters, and/or the like from external systems 106. As another example, the communications circuitry 205 may enable the provision of fueling plans to the computing device 105.

The model circuitry 209 includes hardware, software, firmware, and/or a combination thereof, that carry out processes for predicting GHG impacts and generating fueling plans via generative AI models. For example, in some contexts, the model circuitry 209 includes hardware, software, firmware, and/or the like, that maintain and update a generative AI model 117. In some embodiments, the model circuitry 209 includes hardware, software, firmware, and/or the like, that generate, via the generative AI model 117 an optimal fuel mixing ratio, switch interval, and/or the like that may be implemented to minimize GHG emissions of a vehicle as the vehicle traverses one or more portions of a travel pathway. In some embodiments, the model circuitry 209 includes hardware, software, firmware, and/or the like, that generate condition scenarios based at least in part on permutations of weather conditions, air traffic conditions, atmospheric GHG concentration, and/or the like. In some embodiments, the model circuitry 209 includes hardware, software, firmware, and/or the like, that generate a respective GHG impact for a plurality of candidate fueling plans and determine an optimal fueling plan that demonstrates the greatest reduction in GHG impact subject to constrains of fuel availability, fuel cost, travel efficiency, and/or the like. In some embodiments, the model circuitry 209 includes hardware, software, firmware, and/or the like, that cause outputting of fueling plans to vehicle management systems 102, computing devices 105, and/or the like. For example, the model circuitry 209 may cause rendering of GUIs comprising mixing ratios on a display of a computing device 105. As another example, the model circuitry 209 may cause rendering of a switch interval on a display of the vehicle management system 102 (e.g., enabling a vehicle operator to access and approve fueling plan implementation). In some embodiments, the model circuitry 209 includes a separate processor, specially configured field programmable gate array (FPGA), and/or a specially programmed application specific integrated circuit (ASIC).

The fueling control circuitry 211 includes hardware, software, firmware, and/or a combination thereof, that carry out processes for performing fueling plans. For example, the fueling control circuitry 211 may control fuel switch mechanisms 129, fuel blend mechanisms 131, and/or the like aboard the vehicle 101 to control the type and/or mixing ratio of fuel consumed by the vehicle. In some embodiments, the fueling control circuitry 211 is configured to provision commands to the vehicle management system 102 to cause the vehicle management system 102 to execute a fueling plan, such as by switching active fuel consumption of the vehicle between types or blending fuel types in accordance with a mixing ratio to provide a target fuel mixture to the vehicle engine. In some embodiments, the model circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, model circuitry 209, and/or fueling control circuitry 211 are combinable. Additionally, or alternatively, in some embodiments, one or more of the sets of circuitry perform some or all of the functionality described associated with another component. For example, in some embodiments, two or more of the sets of circuitry 201-211 are combined into a single module embodied in hardware, software, firmware, and/or a combination thereof. Similarly, in some embodiments, one or more of the sets of circuitry, for example the memory 203, communication interface 205, model circuitry 209, and/or fueling control circuitry 211 is/are combined with the processor 201, such that the processor 201 performs one or more of the operations described above with respect to each of these sets of circuitry 203-211.

## Example Data Architecture and Workflows of the Disclosure

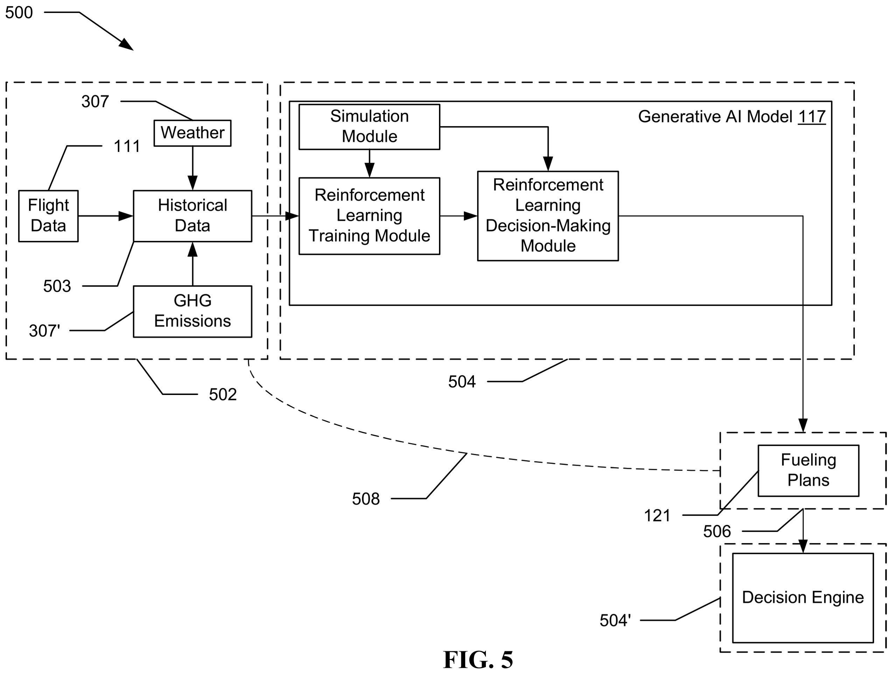

Having described example systems and apparatuses in accordance with embodiments of the present disclosure, example architectures and workflows of data in accordance with the present disclosure will now be discussed. In some embodiments, the systems and/or apparatuses described herein maintain data environment(s) that enable the workflows in accordance with the data architectures described herein. For example, in some embodiments, the systems and/or apparatuses described herein function in accordance with the data architectures depicted and described herein with respect to FIG. 3 and are maintained via the apparatus 200. As another example, one or more emission reduction systems are configured in accordance with the diagrams and workflows shown in FIGS. 4 and 5, respectively, and described herein.

FIG. 3. illustrates an example data architecture 300 in accordance with at least some example embodiments of the present disclosure. In some embodiments, vehicle data 109 includes vehicle heading, attitude, velocity, acceleration, pitch, travel phase (e.g., taxiing, ascending, cruising, descending, arriving, and/or the like), altitude, internal temperature, internal pressure, vibration level, respective component or system health, and/or the like. In some embodiments, the vehicle data 109 includes a make, model, version, type, or other classification of the vehicle 101.

In some embodiments, vehicle data 109 includes engine data 301 that describes one or more engine systems of the vehicle 101. In some embodiments, the engine data 301 includes engine type, version, configuration, age, health, and/or the like. In some embodiments, the engine data 301 indicates one or more fuel types, fuel mixtures, and/or the like, that may be used to power the engine. In some embodiments, vehicle data 109 includes fueling data 303 that describes one or more fueling requirements, configurations, capabilities, and/or the like of the vehicle 101. In some embodiments, the fueling data 303 includes fuel tank specifications including fuel capacity (e.g., volume available for storing fuel), storable fuel types or mixtures, and/or the like. In some embodiments, the engine data 301, fueling data 303, and/or the like comprises respective emission factors pursuant to one or more fuel types, fuel mixtures, and/or the like. In some embodiments, the engine data 301, fueling data 303, and/or the like includes respective efficiency levels of the vehicle 101 in accordance with different fuel types, fuel mixtures, and/or the like. In some embodiments, vehicle data 109 includes position data 305 indicative of a geographical position of the vehicle 101. In some embodiments, the position data 305 includes a position of the vehicle 101 relative to one or more locations or other vehicles, and/or the like. For example, the vehicle data 109 may include one or more measures of distance between the vehicle 101 and portions of a travel pathway, a landing site, a geofence, a political boundary, a geographical feature, a point of interest, and/or the like.

In some embodiments, travel pathway data 111 includes one or more travel pathways of the vehicle 101 (e.g., historical, current, and future travel pathways). For example, travel pathway data 111 may include a destination, such as a landing site (e.g., airport, helipad, ground station, and/or the like), a political boundary, a geographical feature, and/or the like. In various embodiments, the travel pathway data 111 includes respective routes for traversing between an origin and a destination, including traversal trajectory, altitude, speed, and/or the like.

In some embodiments the travel pathway data 111 includes historical, current, and forecasted environmental data 307. In some embodiments, environmental data 307 includes weather data comprising one or more meteorological conditions present, forecasted, or previously documented along one or more portions of a travel pathway. For example, the environmental data 307 may include wind patterns, wind intensities, wind shear or other turbulence-causing conditions, temperature, pressure, humidity, precipitation levels, precipitation types (e.g., rain, snow, sleet, fog, ice, and/or the like), dust or other debris conditions, and/or the like. In various embodiments, the environmental data 307 includes greenhouse data pursuant to geographic regions associated with one or more portions of a travel pathway. For example, the environmental data 307 may include respective atmospheric GHG concentration levels of a plurality of geographic regions. In various embodiments, the environmental data 307 includes historical, current, and predicted GHG concentration levels. For example, the environmental data 307 may include historical, current, and forecasted carbon dioxide concentrations. In some embodiments, subsets of environmental data 307 are associated with different altitudes, durations, timestamps, and/or the like. For example, subsets of environmental data 307 may be associated with different time intervals, such as seasons, months, days, daylight hours, and/or the like.

In some embodiments, the travel pathway data 111 includes historical, current, and forecasted vehicle traffic data 309. In some embodiments, vehicle traffic data 309 includes vehicle traffic density along one or more portions of a travel pathway. In some embodiments, vehicle traffic data 309 includes estimated total emissions of vehicles passing through a travel pathway portion (or geographical region associated therewith) pursuant to an interval, such as 1 hour, 24 hours, 1 week, 1 month, or another suitable period. In some embodiments, travel pathway data 111 includes a travel interval 311 that indicates a time at which traversal of the travel pathway is scheduled to occur. For example, the travel interval 311 may indicate a season, month, day, time of day, daylight hours, and/or the like at which a vehicle 101 is scheduled to traverse the travel pathway. In this manner, GHG impact predictions 119, fueling plans 121, and/or the like may be generated in accordance with condition scenarios specific to the travel interval 311. The travel interval 311 may increase the accuracy of simulated condition scenarios and GHG impact predictions 119, which may enable the generative AI model 117 to improving the optimization and specificity of fueling plans 121.

In some embodiments, the travel pathway data 111 includes one or more fuel requirements 313 indicative of fuel needed to traverse a travel pathway, comply with fueling regulations, and/or the like. In some embodiments, fuel requirements 313 include location-specific policies that mandate use or avoidance of one or fuel type, fuel mixtures, and/or the like while traversing through a geographical region. In some embodiments, the travel pathway data includes one or more efficiency thresholds 315 that indicate one or more target engine efficiency levels for the vehicle 101 in accordance with one or more portions of the travel pathway, or the overall travel pathway. In this manner, fueling plans 121 may be generated such that efficiency thresholds are satisfied while reducing GHG impact. In some embodiments, the travel pathway data 111 includes one or more emission thresholds 317 that indicate maximum emission levels, maximum atmospheric GHG concentrations, and/or the like, pursuant to one or more geographic regions and/or travel pathway portions. For example, an emission threshold 317 may include a maximum emission amount for traversing a travel pathway or portion thereof. As another example, an emission threshold 317 may include a maximum atmospheric GHG concentration level, or maximum change in the value thereof, for a portion of a travel pathway. In some embodiments, emission thresholds 317, efficiency thresholds 315, and/or the like may be configured by a vehicle operator, vehicle maintainer, vehicle owner, regulatory authority, and/or the like.

In some embodiments, fuel availability parameters 113 include available fuel volumes 319, fuel costs 321, and emission factors 323. In some embodiments, an available fuel volume 319 indicates a quantity of fuel that may be obtained from a fuel provider, such as a merchant, airport depot, storage facility, and/or the like. In some embodiments, a fuel cost 321 includes a historical, current, or forecasted price per unit of fuel. In various embodiments, an emission factor 323 indicates a historical or predicted amount of GHG emissions associated with consuming a unit of fuel. In some embodiments, respective emission factors 323 for a fuel type are associated with different condition scenarios including vehicle speed, mixing ratio, environmental conditions, and/or the like.

In various embodiments, the model data *115* includes generative AI models 117, GHG impact predictions 119, and fueling plans 121. In some embodiments, a generative AI model 117 includes a plurality of parameters 325 by which performance of the generative AI model 117 may be configured. In some embodiments, the parameters 325 include reward functions, policies, constraints, transition functions, sampling temperature, nucleus sampling (e.g., top P), context window, maximum tokens, stop sequence, frequency penalty, present penalty, and/or the like. In some embodiments, the model data 115 includes knowledge bases comprising historical vehicle data 109, historical travel pathway data 111, historical fuel availability parameters 113, historical GHG impact predictions, historical fueling plans 121, and historical GHG impact measurements (e.g., actual GHG emissions and changes to atmospheric GHG concentration in accordance with activity of the vehicle 101). The generative AI model 117 may utilize the knowledge bases as an input to predictive processes and techniques described herein to estimate GHG impact and optimize vehicle fueling strategies.

In some embodiments, one or more generative AI models 117 are configured to generate GHG impact predictions 119 based at least in part on vehicle data 109, travel pathway data 111, fueling plan candidates, and/or the like. In some embodiments, simulated values of vehicle data 109, travel pathway data 111 may embody one or more condition scenarios based upon which GHG impact predictions 119, fueling plans 121, and/or the like may be generated. In various embodiments, the GHG impact prediction 119 includes an estimated GHG emission of the vehicle 101 along a travel pathway or portion of a travel pathway. Alternatively, or additionally, the GHG impact prediction 119 includes an estimated change to atmospheric GHG concentration in a geographic region comprising one or more portions of a travel pathway or the overall travel pathway, the change occurring in response to estimated emissions of the vehicle 101 during traversal. Alternatively, or additionally, in some embodiments, the GHG impact prediction 119 includes an indication of whether estimated emissions of the vehicle 101 are predicted to increase atmospheric GHG concentration in excess of one or more emission thresholds 317.

In some embodiments, the generative AI model 117 is configured to generate a fueling plan 121 based at least in part on vehicle data 109, travel pathway data 111, fuel availability parameters 113, GHG impact predictions 119, and/or the like. The fueling plan 121 may include one or more mixing ratios 327 for pre-mixing or dynamically mixing a fuel mixture before or during traversal of the travel pathway. Alternatively, or additionally, the fueling plan 121 includes one or more switch intervals 329 for dynamically switching active fuel consumption of the vehicle 101 between conventional fossil fuel and reduced emission fuel along portions of the travel pathway.

In some embodiments, the fueling plan 121 includes an estimated total GHG emission of the vehicle 101 that may be achieved by performance of the fueling plan 121. In some embodiments, the fueling plan 121 includes an estimated change to atmospheric GHG concentration that may occur in performance of the fueling plan 121 and as a result of the vehicle 101 traversing the travel pathway. In some embodiments, the fueling plan 121 includes an estimated efficiency of the vehicle 101 over the traversal of the travel pathway. In some embodiments, the fueling plan 121 includes an indication of whether estimated efficiency satisfies one or more efficiency thresholds 315 (e.g., minimum efficiency, target efficiency range, and/or the like). In some embodiments, the fueling plan 121 includes one or more resource cost estimates including cost of obtaining fuel, cost of mixing fuel, cost of engine maintenance, and/or the like, that is associated with performance of the fueling plan.

In some embodiments, the model data *115* includes measurements of GHG impact associated with the vehicle 101 traversing the travel pathway in accordance the fueling plan 121. For example, the model data *115* may include measurements of actual vehicle emissions over the travel pathway, or portions thereof. Additionally, or alternatively, the model data *115* may include measurements of changes to atmospheric GHG concentration over portions of the travel pathway during or following traversal of the vehicle 101 along the portion.

FIG. 4 illustrates an example model architecture 400 for generative AI-based fuel planning in accordance with at least some example embodiments of the present disclosure. In some embodiments, the generative AI model 117 is configured to generate a fueling plan 121 based at least in part on one or more inputs comprising vehicle data 109, travel pathway data 111 (e.g., including environmental data 307 associated with the travel pathway), fuel availability parameters 113, and/or the like. In various embodiments, the fueling plan 121 includes a mixing ratio, switch interval, and/or the like. In some embodiments, the emission reduction system 103 (e.g., embodied as one or more apparatuses 200) is configured to train the generative AI model 117 in accordance with a reinforcement learning (RL) workflow 500 (FIG. 5).

In some embodiments, in accordance with a travel pathway, the generative AI model 117 is configured to generate an optimal mixing ratio between conventional fossil fuel and reduced-emission fuel such that a maintainer of the vehicle may produce a fuel mixture in accordance with the mixing ratio and provide the fuel mixture to the vehicle prior to traversal of the travel pathway. For example, in an aerial context, the generative AI model 117 is configured to compute the optimal proportion of SAF in the fuel mixture (referenced herein as $P_{SAF}$) before takeoff based at least in part on a GHG impact analysis of the flight corridor according to the travel pathway.

In some embodiments, the generative AI model 117 is configured to generate a total emission calculation $E_{Total}$ pursuant to the vehicle traversing the travel pathway in accordance with an initial blend. For example, the generative AI model 117 may generate a total emission calculation in accordance with Equation 1, where $E_{SAF}$ represents the emission factor of the reduced-emission fuel (e.g., SAF), $P_{Fossil}$ represents the proportion of fossil fuel in the fueling mixture (e.g., expressible as one minus $P_{SAF}$), $E_{Fossil}$ represents the emission factor of the fossil fuel, and F represents the total fuel required to traverse the travel pathway.

$$E_{Total} = (P_{SAF} * E_{SAF} + P_{Fossil} * E_{Fossil}) * F \qquad \text{(Equation 1)}$$

In some embodiments, the generative AI model 117 is configured to optimize the proportion of reduced-emission fuel that minimizes total emissions for the travel pathway (e.g., or a subset of the travel pathway, such as a portion associated with a threshold atmospheric GHG concentration) pursuant to one or more constraints including availability of the reduced emission fuel, fuel cost, efficiency impact, and/or the like. For example, the generative AI model 117 may optimize $P_{SAF}$ in accordance with a constraint of the following form:

$$\min_{P_{SAF}} E_{Total} \text{ subject to } P_{SAF} \leq \frac{Available\ SAF}{F}, Cost(P_{SAF}) \leq Budget$$

Additionally, or alternatively, in some embodiments, the generative AI model 117 is configured to perform real-time GHG impact analysis as the vehicle 101 traverses the travel pathway and generate one or more intervals at which to switch active fuel consumption of the vehicle between fossil fuel and reduced-emissions fuel. For example, in accordance with Equation 2, the generative AI model 117 may generate respective values of a real-time GHG impact cost function in accordance with a plurality of distance portions D along the travel pathway, where function is represented as $C_{GHG}(D)$. In various embodiments, the generative AI model 117 is configured to generate an interval for switching from fossil fuel to reduced-emissions fuel in accordance with an instance in which the value of $C_{GHG}(D)$ is predicted exceed a predetermined threshold (e.g., $C_{Threshold}$).

$$C_{GHG}(D) = f(weather\ conditions, altitude, air\ traffic) \qquad \text{(Equation 2)}$$

Additionally, or alternatively, in some embodiments, the generative AI model 117 is configured to dynamically update the proportion of reduced-emissions fuel in the fuel mixture consumed by the engine. In various embodiments, the generative AI model 117 updates the fuel mixing ratio between the fossil fuel and reduced-emission fuel based at least in part on the current GHG impact of the vehicle 101 as the vehicle 101 traverses the travel pathway. In doing so, the emission reduction system 103 may cause dynamic blending of reduced-emission and fossil fuels throughout travel pathway traversal based on real-time predicted impacts of GHG emissions, such as whether emissions are predicted to contribute to exceedance of a target atmospheric GHG concentration. For example, the generative AI model 117 may continuously update a blend proportion $B_{Dynamic}(D)$ (also referred to as a mixing ratio) in accordance with Equation 3, where $P_{SAF}(D)$ is adjusted in real-time based at least in part on $C_{GHG}(D)$.

$$B_{Dynamic}(D) = \frac{P_{SAF}(D)}{P_{SAF}(D) + P_{Fossil}(D)} \qquad \text{(Equation 3)}$$

In some embodiments, the generative AI model 117 is configured to generate (or update) the mixing ratio for respective portions of the travel pathway in accordance with the following constraint:

$$\min_{B_{Dynamic}D} \left(B_{Dynamic}(D) * E_{SAF} + \left(1 - B_{Dynamic}(D)\right) * E_{Fossil}\right)$$

In various embodiments, the emission reduction system 103 is configured to generate pre-traversal fueling plans, intra-traversal fueling plans, and/or the like. For example, in an aerial context, the emission reduction system 103 may generate a mixing ratio by which a mixture of fossil fuel and reduced-emission fuel may be combined on the ground in advance of a flight (e.g., the mixture being supplied to the aerial vehicle during pre-flight fueling). Alternatively, or additionally, the aerial vehicle may include separate onboard volumes of fossil fuel and reduced-emission fuel such that a fuel mixture may be dynamically blended and adjusted mid-traversal based at least in part on real-time GHG impact predictions and mixing ratio optimizations generated by the emission reduction system 103. Alternatively, or additionally, the emission reduction system 103 may generate one or more switch intervals (e.g., pre-traversal and/or dynamically mid-traversal) by which active fuel consumption of the aerial vehicle may be transitioned between fossil fuel and reduced-emission fuel. In this manner, the present methods, apparatuses, and computer program products may overcome technical challenges of reducing total GHG emissions and impact within the context of limited availability and increased cost of reduced-emission fuels. For example, in an aerial context, stakeholders may implement the described methods, apparatuses, and computer program products to optimize fuel usage to minimize environmental impact while optimizing fuel usage efficiency.

For purposes of illustrating and describing example aspects of the present methods, apparatuses, and computer program products, the proceeding description of model architecture and functionality is presented in the context of aerial vehicles. It will be understood and appreciated that the description is exemplary in nature and the model architecture and functionality may be implanted in other emission reduction contexts without departing from the scope and spirit of the disclosure.

In some embodiments, the generative AI model 117 is configured to generate a fueling plan 121 by which the overall type or fractional blend of fuel consumed by an aerial vehicle may be adjusted to optimally reduce GHG impact of the vehicle along one or more portions of a travel pathway. For example, the generative AI model 117 may be configured to predict a fueling plan 121 for an aerial vehicle based at least in part on vehicle data 109, travel pathway data 111, environmental data 307, fuel availability parameters 113, and/or the like. In an aerial context, the vehicle data 109 may include various documentation indicative of the configuration of the aircraft, including fleet type, fuel tank specifications, engine type, and/or the like). Further, the vehicle data 109 may include documentation of engine capability to support various fuel types, fuel mixtures, and/or the like.

The travel pathway data 111 may include various documentation indicative of flight data associated with a mission of the aerial vehicle. For example, the travel pathway data 111 may include a flight path ("travel pathway") of the aerial vehicle between an origin and one or more destinations, such as respective routes between pairs of cities, airports, and/or the like. The travel pathway data 111 may further include a cruising altitude of the aerial vehicle along various portions of the travel pathway. Additionally, the travel pathway data 111 may include target velocities, accelerations, travel times, and/or the like, for the aerial vehicle.

The environmental data 307 may include various documentation indicative of current and historical greenhouse data pursuant to geographical areas along portions of the travel pathway. For example, the environmental data 307 may include geographical mappings of the travel pathway and respective current and historical GHG concentrations measured or predicted at the various segments of the travel pathway. Respective subsets of the current and historical greenhouse data may be associated with different environmental factors, such as season (or other temporal classification), temperature, wind pattern, vehicle traffic density, and/or the like. In this manner, the generative AI model may be trained to generate predictions based at least in part on a knowledge base that is temporally and environmentally consistent with conditions currently present along the travel pathway. The fuel availability parameters 113 may include respective availabilities and current costs of various fuel types at facilities associated with the travel pathway of the aerial vehicle. For example, the fuel availability parameters 113 may include current fuel prices and availability at an origin airport or destination airport of the aerial vehicle.

The generative AI model 117 may generate a fueling plan 121 including one or more mixing ratios for blending conventional fuel and reduced-emission fuel. Additionally, the fueling plan 121 may include respective total volumes required for the fuel types associated with the fuel mixture. The fueling plan 121 may embody a pre-flight advisory such that a maintainer of the aerial vehicle may obtain and fuel the aerial vehicle with the generated fuel blend prior to takeoff. Additionally, or alternatively, the fueling plan 121 comprises a dynamically generated recommendation for generating the fuel mixture midair as the vehicle 101 moves into or out of proximity of a particular portion of the travel pathway, such as a portion associated with a threshold GHG concentration.

Alternatively, the generative AI model 117 may generate a fueling plan 121 including one or more intervals along the travel pathway at which to transition active fuel consumption of the aerial vehicle from a conventional fuel type to a fuel type associated with comparatively lower emissions. For example, the interval may indicate a geographical milestone along the travel pathway at which a fuel switch mechanism may be activated to transition the fuel source of the aerial vehicle from Jet A, Jet A1, Jet B, and/or the like, to an SAF. The geographical milestone may be associated with movement of the aerial vehicle into a predetermined proximity of a geographical area associated with a threshold atmospheric GHG concentration. As another example, the interval may indicate a flight phase, altitude, cruise speed, travel time, and/or the like at which to trigger a switch between fuel types.

Turning now to FIG. 5, shown is an example RL workflow 500 by which the apparatus 200 may train and execute the generative AI model 117 to predict GHG emission impact and generate optimal fueling plans for switching between or mixing fossil fuel and reduced-emission fuel. In some embodiments, an RL framework in which the workflow 500 is implemented includes an input layer 502, a processing layer 504, 504', an output layer 506, and a feedback loop 508. In some embodiments, one or more layers, or subsets of layers, are embodied by computing resources that are external to the vehicle 101. In some embodiments, one or more layers, or subsets of layers, are embodied by computing resources on board the vehicle 101. For example, the historical data 503, RL training module, RL decision-making module, and decision-making engine may be embodied by any combination of hardware, firmware, software, and the like, that is external to vehicle 101. The generative AI model 117 generated via the workflow 500 may be embodied by any combination of hardware, firmware, software, and/or the like aboard the vehicle 101. For example, the generative AI model 117 may be initially trained outside the vehicle 101 and subsequently deployed to the vehicle 101.

In some embodiments, in the input layer 502, the workflow 500 includes obtaining historical data 503 including historical vehicle data 109, historical travel pathway data 111, historical environmental data 307, 307', historical fuel availability parameters, and/or the like. For example, the historical data 503 may include respective historical fuel consumption measurements in accordance with previous traversals of the travel pathway. As another example, the historical data 503 may include historical weather conditions in geographical areas located along the various portions of the travel pathway. In another example, the historical data 503 may include historical GHG emission and atmospheric concentration data in accordance with the travel pathway. As another example, the historical data may include historical fuel availability parameters including historical fuel costs, historical fuel availabilities, and/or the like. In such contexts, the historical weather conditions, GHG emissions, fuel availability parameters, and/or the like, may be associated with a time of year in which the current traversal of the travel pathway is scheduled to occur. For example, the historical weather conditions may be associated with the season in which the current traversal is scheduled to occur. In various embodiments, the workflow 500 utilizes the historical data 503 as an input to an RL training module of the processing layer 504.

In various embodiments, in the input layer 502, the workflow 500 includes obtaining input data including real-time vehicle data 109, travel pathway data 111, environmental data 307, 307', fuel availability parameters 113, and/or the like. For example, in an aerial context, the workflow 500 may include obtaining real-time values flight data including vehicle altitude, travel pathway weather conditions, vehicle traffic, fuel levels, and/or the like. In various embodiments, the workflow 500 utilizes the real-time data as an input to an RL decision-making module of the processing layer 504. Additionally, in some embodiments, in the input layer 502, the workflow 500 includes obtaining fuel availability parameters including data indicative of the respective available volumes and costs of conventional fossil fuel, reduced-emissions fuel, and/or the like. For example, in an aerial context, the workflow 500 may include obtaining historical and/or current available volumes and costs of Jet A, Jet A1, Jet B, SAF, and/or the like, at one or more airports associated with a travel pathway of an aerial vehicle. In various embodiments, the workflow 500 utilizes the fuel availability parameters as an input to the RL decision-making module of the processing layer 504. For example, the fuel availability parameters (and other data obtained at the input layer 502) may be an input to one or more policy optimization processes described herein.

In various embodiments, in the processing layer 504, the workflow 500 includes training the generative AI model based at least in part on the historical data 503. The processing layer 504 may include an RL training module configured to train the generative AI model 117 (e.g., embodied as one or more RL agents) to optimize fueling plans 121 based at least in part on the historical data 503 and additional data obtained via the feedback loop 508, such as GHG impact estimates following traversal of the travel pathway. In various embodiments, outputs of the RL training module may be utilized by other elements of the processing layer 504, such as by the RL decision-making module in generation of fueling plans 121 and in performance of policy optimization processes.

In various embodiments, in the processing layer 504, the workflow 500 includes continuously analyzing real-time travel pathway data, fuel availability parameters, vehicle data, and/or the like to generate fuel switching intervals, mixing ratios, and/or the like. The processing layer 504 may include an RL decision-making module configured to generate fueling plans 121. In some embodiments, the RL decision-making module is further configured to optimize the fuel plan generation process based at least in part on one or policy optimization techniques. For example, the workflow 500 may include optimizing policies by which a current state of the vehicle 101 and environment along the travel pathway may be mapped to a fueling plan candidate (e.g., a mixing ratio, switch interval, and/or the like).

In some embodiments, in the processing layer 504, the workflow 500 includes a simulation model configured to generate various condition scenarios that simulate different scenarios of fuel availability, weather, GHG impact, and/or the like, such that RL training operations may be diversified. The various condition scenarios may be utilized by the RL training module, RL decision-making module, and/or the like to optimize performance of the generative AI model 117 across all conditions, or a subset of conditions most likely to occur along the travel pathway.

In some embodiments, the workflow 500 includes training the generative AI model 117 via the RL training module. In various embodiments, the generative AI model 117 is trained to predict GHG impacts, generate optimal fueling plans 121, and/or the like, in accordance with various condition scenarios. In some embodiments, the RL training module trains the generative AI model 117 to predict optimal fuel planning strategies based at least in part on training data comprising the historical data 503. In various embodiments, "optimal" refers to maintaining GHG impact within one or more threshold levels along the travel pathway (or portions thereof) while minimizing increases to resource costs (e.g., fuel cost, maintenance cost, travel time, and/or the like). For example, the RL training module may train the RL agent to predict optimal fuel mixing ratios, fuel switch intervals, and/or the like, based at least in part on historical data 503. In an aerial context, the RL training module may the train the RL agent to predict optimal fuel planning strategies based at least in part on historical flight data, historical GHG impact, and historical fuel costs factors.

In some embodiments, in performance of the workflow 500, the apparatus 200 defines a state space S such that the state $s_t \in$ S describes the travel environment and conditions at time t (e.g., a historical interval, current time, and/or the like). In an aerial context, the state $s_t$ may include location of the vehicle along a flight path, vehicle altitude, weather conditions, air traffic density, available onboard volumes of conventional fossil fuel and SFA, summation of GHG emissions up to time t, regulatory constrains pursuant to the geographical areas traversed via the flight path, and/or the like. In some embodiments, the state at time $t$ ($s_t$) is represented as a vector in accordance with Equation 4.

$$s_t = [\text{altitude, weather, fuel levels, GHG emissions, position, traffic, regulation}] \quad \text{(Equation 4)}$$

In various embodiments, the apparatus 200 defines an action space $A$ that represents the actions of the RL agent at the time t (e.g., $a_t \in A$). In various embodiments, the action comprises a fueling plan 121, such as a fuel type switch, mixing of fuel types in accordance with a mixing ratio, and/or the like. In some embodiments, the actions of the RL agent $a_t \in A$ at time $t$ include generating the respective proportions of reduced-emission fuel and conventional fossil fuel to use at any given time. Additionally, the actions of the RL agent $at \in A$ at time $t$ include determining whether to switch active fuel consumption entirely to the reduced-emission fuel type or the conventional fossil fuel type, or to utilize a fuel mixture. For example, in an aerial context, the actions of the RL agent $at \in A$ at time $t$ include generating the proportion of SAF (e.g., $P_{SAF}$) and proportion of fossil fuel (e.g., $P_{Fossil}$) to use at any given time, and determining whether to switch entirely to SAF or fossil fuel or utilize a fuel mixture thereof in accordance with the generated proportions. In some embodiments, the action $A$ is represented in accordance with Equation 5 and is subjected to a constraint defined in accordance with Equation 6.

$$a_t = [P_{SAF}(t), P_{Fossil}(t)] \quad \text{(Equation 5)}$$

$$P_{SAF}(t) + P_{Fossil}(t) = 1 \quad \text{(Equation 6)}$$

In some embodiments, a reward function of the generative AI model 117 is based at least in part on a negative summation of one or more greenhouse emission estimates for the vehicle along the at least a portion of the travel pathway and one or more fuel availability parameters (e.g., fuel costs, efficiency reduction, and/or the like). For example, the apparatus 200 may define a reward function in accordance with Equation 7 such that the reward at time t is based on the GHG emission reduction and fuel efficiency. In such contexts, the reward may be higher when the proportion of reduced-emission fuel (e.g., SFA, and/or the like) is higher, GHG emissions are lower, and the fuel cost is minimized. In various embodiments, the apparatus 200 defines the total reward $R(s_t, a_t)$ in accordance with Equation 8 as a negative weighted sum of GHG impact and fuel costs. In Equation 8, $\alpha$ may represent the weight for GHG emissions (e.g., the importance of reducing emissions) and $\beta$ may represent the weight for fuel costs (e.g., the importance of cost efficiency).

$$r_t = R(s_t, a_t) \quad \text{(Equation 7)}$$

$$R(s_t, a_t) = -(\alpha * GHG\ emissions\ (s_t, a_t) + \beta * Fuel\ Cost\ (s_t, a_t) \quad \text{(Equation 8)}$$

In some embodiments, the generative AI model 117 is configured to predict GHG emissions as a function of the fuel mixture in accordance with Equation 9, in which $E_{SAF}$ and $E_{Fossil}$ are the emission factors of reduced-emission and fossil fuels, respectively. In some embodiments, the generative AI model 117 generates fuel costs in accordance with Equation 10, in which $C_{SAF}$ and $C_{Fossil}$ are the costs of reduced-emission and fossil fuels per unit, respectively.

$$GHG\ emissions\ (s_t, a_t) = P_{SAF}(t) * E_{SAF} + P_{Fossil}(t) * E_{Fossil} \quad \text{(Equation 9)}$$

$$Fuel\ Cost\ (s_t, a_t) = P_{SAF}(t) * C_{SAF} + P_{Fossil}(t) * C_{Fossil} \quad \text{(Equation 10)}$$

In some embodiments, the apparatus 200 defines a transition function $T(st_{+1} | s_t, a_t)$ configured to describe how the state changes based at least in part on the current state $s_t$ and the action $a_t$. In various embodiments, the transition function models the evolution of travel pathway conditions, GHG emissions, and fuel levels as time progresses. For example, as expressed in Equations 11 and 12, respectively, fuel consumption reduces fuel levels and GHG emissions increase cumulatively over time.

$$Fuel\ Levels\ at\ t + 1 = Fuel\ Levels\ at\ t - Fuel\ Consupmtion\ at\ t \quad \text{(Equation 11)}$$

$$Cumulative\ Emissions_{t+1} = Cumulative\ Emissions_t + GHG\ emissions\ (s_t, a_t)$$

$$\text{(Equation 12)}$$

In various embodiments, the generative AI model 117 is trained based at least in part on the historical data 503 to predict one or more GHG impacts (e.g., total emissions, one or more changes to atmospheric GHG concentration, and/or the like) and generate a fueling plan 121 (e.g., RL agent action) that minimizes the GHG impact subject to constraints of fuel availability, fuel cost, vehicle capabilities, travel pathway traversal time, and/or the like.

In various embodiments, the workflow 500 includes optimizing policies of the fueling plan generation process via the RL decision-making module. The RL decision-making module may be configured to generate optimal policies for maximizing the cumulative reward of the generative AI model 117. For example, the RL decision-making module may carry out optimization processes in accordance with one or more Q-learning techniques, proximal policy optimization techniques, and/or the like. In some embodiments, the RL decision-making module obtains as input data one or more fuel availability parameters including available volume of reduced-emission fuel, cost of reduced-emission fuel, available volume of fossil fuel, cost of fossil fuel, and/or the like.

In some embodiments, the generative AI model 117 is configured to map environmental data to a fueling plan based at least in part on a policy. For example, the apparatus 200 may define a policy $\pi(a_t|s_t)$, which maps the current state $s_t$ to an action $a_t$. In various embodiments, via the RL agent, the generative AI model 117 is configured to learn an optimal policy $\pi^*(a_t|s_t)$ that maximizes the cumulative reward $R(s_t, a_t)$ over the course of navigating the travel pathway. In some embodiments, the generative AI model 117 is configured to generate the optimal iteration of the policy at least in part by maximizing the expected cumulative reward in accordance with Equation 13, in which $\gamma$ is the discount factor that balances immediate rewards versus future rewards and T is the total time horizon of the travel pathway.

$$\pi * (a_t \mid s_t) = \arg \max_{\pi} \mathbb{E}[\sum_{t=0}^{T} \gamma^t * R(s_t, a_t)] \qquad \text{(Equation 13)}$$

In some embodiments, the generative AI model 117 is configured to perform a Q-Learning technique for fuel optimization. For example, the workflow 500 may include configuring the generative AI model 117 to learn an action-value function $Q(s_t, a_t)$ that estimates the expected future reward for taking action $a_t$ in state $s_t$. In some embodiments, the generative AI model 117 updates the Q-value function in accordance with Equation 14, where $\alpha$ represents the learning rate and $\gamma$ represents the discount factor. In various embodiments, the RL agent derives the policy $\pi$ in accordance with Equation 15 by choosing the action the maximizes the Q-value.

$$Q(s_t, a_t) \leftarrow Q(s_t, a_t) + \alpha(R(s_t, a_t) + \gamma \max_{a'} Q(s_{t+1}, a') - Q(s_t, a_t)) \qquad \text{(Equation 14)}$$

$$\pi(s_t) = \arg \max_{a \; at \; t} Q(s_t, a_t) \qquad \text{(Equation 15)}$$

In some embodiments, the generative AI model 117 comprises one or more neural networks configured to approximate the Q-value function. For example, the generative AI model 117 may comprise a Deep-Q network (DQN) configured to Q-value function $Q(s_t, a_t; \theta)Q(s_t, a_t; 0)$, where $\theta$ and $\theta$ are the parameters of the neural network. In some embodiments, the generative AI model 117 utilizes the DQN in instances where the state space S and the action space $A$ comprise a large data volume. In some embodiments, the workflow 500 includes training the DQN to minimize the loss $\mathcal{L}$ ($\theta$) between the predicted and target Q-values according to Equation 16, in which $\theta'$ are the parameters of a target network that is periodically updated to stabilize learning.

$$\mathcal{L}(\theta) = \mathbb{E}\left[(R(s_t, a_t) + \max_{a'} Q(s_{t+1}, a'; \theta') - Q(s_t, a_t; \theta))^2\right] \qquad \text{(Equation 16)}$$

Alternatively, or additionally, in some embodiments, the workflow 500 includes configuring the generative AI model 117 to perform one or more proximal policy optimization (PPO) processes. In various embodiments, in performance of a respective PPO process, the generative AI model 117 is configured to directly optimize the policy $\pi(a_t|s_t)$ to maximize the expected cumulative reward while avoiding introduction of model instability by ensuring that the new policy does not deviate excessively from the previous policy. In some embodiments, the generative AI model 117 performs the PPO process in accordance with Equation 17, where $r_t(\theta)$ is the ratio of the new policy to the old policy as defined in accordance with Equation 18. In some embodiments, $\hat{A}_t$ is an advantage function that quantifies improvement of the chosen action as compared to the expected action. In some embodiments, $\varepsilon$ is a hyperparameter that controls how much the policy can change between updates.

$$\mathcal{L}(\theta) = \mathbb{E}\left[min\left(r_t(\theta)\hat{A}_t, clip(r_t(\theta), 1 - \epsilon, 1 + \epsilon)\hat{A}_t\right)\right] \qquad \text{(Equation 17)}$$

$$r_t(\theta) = \frac{\pi(a_t \mid s_t; \theta)}{\pi_{old}(a_t \mid s_t; \theta_{old})} \qquad \text{(Equation 18)}$$

In some embodiments, the described operations of the workflow 500 are performed iteratively in accordance with a plurality of condition scenarios generated by the simulation module of the processing layer 504. In some embodiments, the generative AI model 117 is trained in a computing environment external to the vehicle 101 until the generative AI model 117 demonstrates performance levels, stability, and/or the like that satisfies one or more thresholds or other criteria. In various embodiments, the trained generative AI model 117 is stored on the vehicle 101 such that the apparatus 200 may execute the generative AI model 117 during traversal of the vehicle 101 along the travel pathway to dynamically generate or update fueling plans 121.

In some embodiments, real-time vehicle data 109, travel pathway data 111, fuel availability parameters 113, environmental data 307, fueling plans 121, and/or the like are cycled into the workflow 500 via one or more feedback loops 508. In this manner, the generative AI model 117 may be continuously trained with additional data including GHG impact outcomes of executed fueling plans 121. For example, the RL training module may continuously retrain the generative AI model to improve and adapt fueling plan generation and GHG impact prediction.

In some embodiments, in the processing layer 504', the workflow 500 includes controlling fueling of the vehicle 101 in accordance with the fueling plan 121. In some embodiments, a decision engine is configured to generate one or more actionable commands for a vehicle 101, vehicle operator, vehicle maintainer, and/or the like, based at least in part on the fueling plan 121. For example, the generative AI model 117 may generate an optimal fuel mixing ratio of 1:1. In response, the decision engine may generate an actionable command (e.g., fueling instruction, fuel blend mechanism command, and/or the like) to mix 50 kilograms of conventional fossil fuel and 50 kilograms of reduced-emissions fuel to produce an optimal fuel mixture for traversing one or more portions of the travel pathway. Additionally, or alternatively, the fueling plan 121 may include a switch interval. The decision engine may generate and provision a fuel switch command to a fuel switch mechanism to cause a change in active consumption of fuel from fossil fuel to reduced-emissions fuel in accordance with the switch interval.

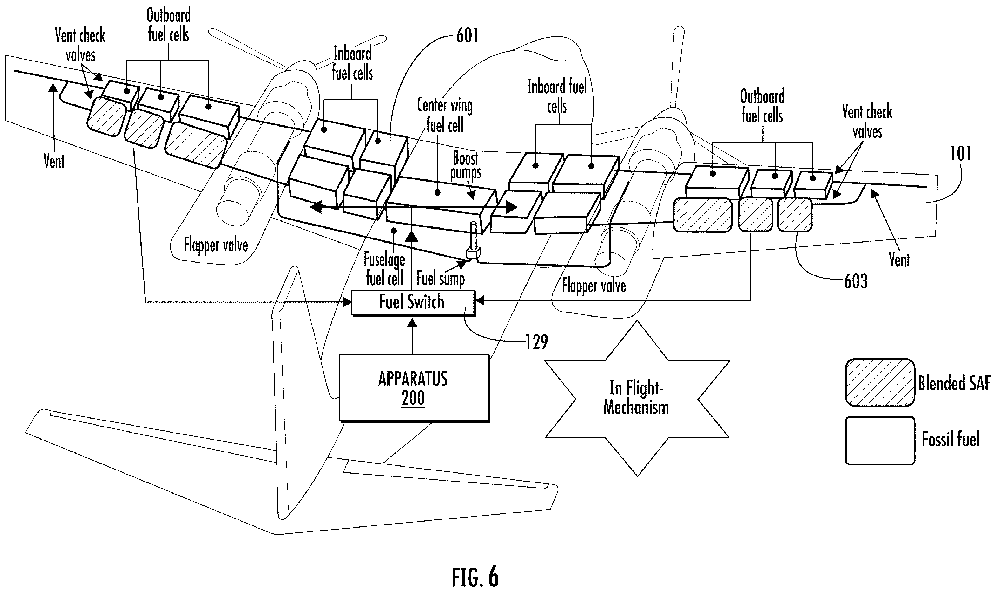

FIG. 6 illustrates an example vehicle 101 in which generative AI-based fuel planning may be implemented in accordance with at least some example embodiments of the present disclosure. In some embodiments, the vehicle 101 includes one or more fuel reservoirs 601 that comprise conventional fuel. For example, a fuel reservoir 601 may comprise a first fuel type volume 125 as shown in FIG. 1 and described herein. In some embodiments, the vehicle 101 includes one or more fuel reservoirs 603 that comprise fuel associated with reduced GHG emission as compared to conventional fuel types contained within the fuel reservoir 601. For example, a fuel reservoir 603 may comprise a second fuel type volume 127 as shown in FIG. 1 and described herein.

In various embodiments, the vehicle 101 includes one or more fuel switch mechanisms 129 configured to control the type of fuel that is actively consumed by one or more engines of the vehicle 101. In some embodiments, the fuel switch mechanism 129 comprises one or more valves, gates, and/or the like by which engine fuel supply lines may be connected and disconnected to and from fuel reservoirs 601, fuel reservoirs 603, and/or the like. In some embodiments, the apparatus 200 is configured to control the fuel switch mechanism 129 in accordance with a fueling plan 121. For example, the fueling plan 121 may include an interval along the travel pathway at which the active fuel consumption of the vehicle may be switched from a first fuel type to a second fuel type to reduce GHG impact of the vehicle along a portion of the travel pathway. The interval may include a time, milestone, and/or the like, that, when detected or reached, causes the apparatus 200 to activate the fuel switch mechanism 129. Alternatively, in some embodiments, the apparatus 200 provisions the fueling plan 121 to a vehicle management system 102 to cause the vehicle management system 102 to control the fuel switch mechanism 129 in accordance with the generated interval.

In some embodiments, the apparatus 200 is configured to continuously evaluate the GHG impact of the vehicle 101 as the vehicle 101 traverses a travel pathway. For example, the apparatus 200 may predict a GHG impact of the vehicle 101 and generate an updated fueling plan 121 via a generative AI model 117 as the vehicle 101 navigates along a travel pathway. In some embodiments, the updates to the fueling plan 121 cause the apparatus 200 and/or vehicle management system 102 to activate the fuel switch mechanism 129 in one or more instances to switch the fuel usage from fossil fuel to reduced-emission fuel (e.g., SAF, and/or the like) based on the severity of GHG impact levels. For example, in execution of the fueling plan 121, the apparatus 200 may switch active fuel consumption of the vehicle 101 to a reduced-emission fuel type while the vehicle 101 traverses through a portion of the travel pathway in which atmospheric carbon dioxide concentration satisfies a predetermined threshold. In such contexts, the apparatus 200 may switch active fuel consumption to conventional fossil fuel as the vehicle 101 traverses through other portions of the travel pathway that are not associated with threshold concentrations of atmospheric carbon dioxide.

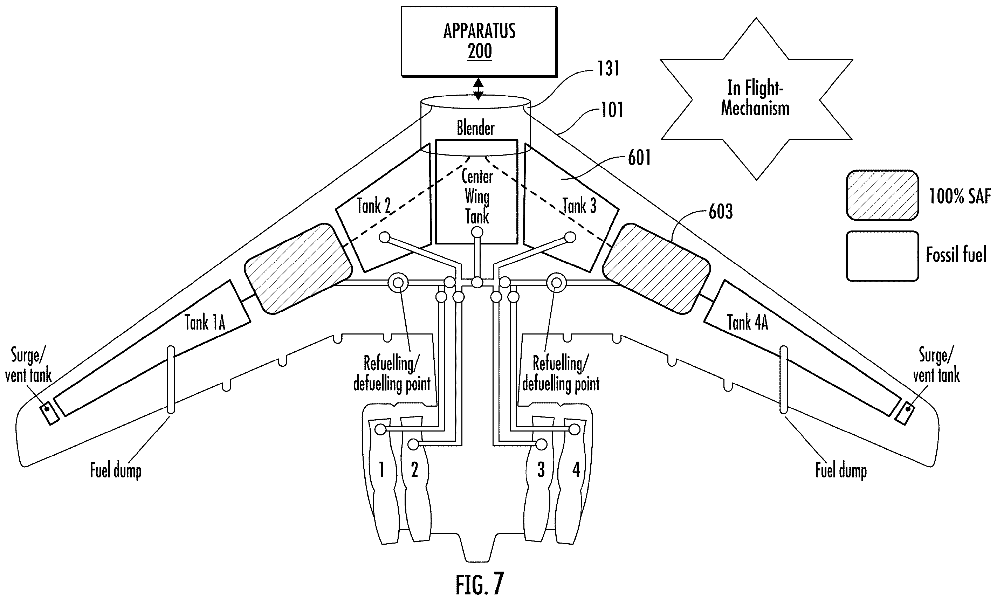

FIG. 7 illustrates an example vehicle 101 in which generative AI-based fuel planning may be implemented in accordance with at least some example embodiments of the present disclosure. In some embodiments, the vehicle 101 includes one or more fuel blend mechanisms 131 configured to combine the different types of fuel from the fuel reservoirs 601, 603 in accordance with a mixing ratio to obtain a fuel mixture 133. In various embodiments, the fuel blend mechanism 131 includes one or more valves, gates, and/or the like, by which proportions of respective fuels from the fuel reservoir 601 and fuel reservoir 603 may be combined and supplied to one or more engines. In some embodiments, the apparatus 200 controls the fuel blend mechanism 131 in accordance with a fueling plan 121 comprising one or more mixing ratios. Alternatively, or additionally, in some embodiments, the apparatus 200 provisions the fueling plan 121 to the vehicle management system 102 to control the fuel blend mechanism 131 in accordance with the fueling plan 121. The mixing ratio may comprise a quantitative relation between a first fuel type (e.g., conventional fossil fuel) and a second fuel type (e.g., a fuel associated with reduced GHG emissions as compared to the first fuel type).

In various embodiments, in execution of a fueling plan 121, the apparatus 200 is configured to control the fuel blend mechanism 131 to increase or decrease the fraction of reduced-emissions fuel being supplied to the engines of the vehicle. For example, in response to the vehicle 101 moving within a predetermined proximity of a portion of the travel pathway, the apparatus 200 may engage the fuel blend mechanism 131 to obtain a fuel mixture 133 comprising 50%, 30%, 20%, or another suitable percentage, of one or more reduced-emission fuels. As another example, in response to the vehicle 101 moving beyond a predetermined proximity of the portion of the travel pathway and/or into a predetermined proximity of a second portion of the travel pathway, the apparatus 200 may adjust the fuel blend mechanism 131 to obtain a fuel mixture 133 comprising a lesser percentage of the reduced-emission fuel (e.g., 40%, 25%, 0%, or another suitable percentage). In some embodiments, the apparatus 200 is configured to update the fueling plan 121 in substantially real time to effect adjustments to the mixing ratio. In this manner, the apparatus 200 may continuously assess atmospheric conditions and the GHG impact of the vehicle 101 and dynamically adjust the ratio of blended fuel to optimally reduce GHG impact while minimizing loss of vehicle performance (e.g., efficiency, fuel cost, and/or the like).

## Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

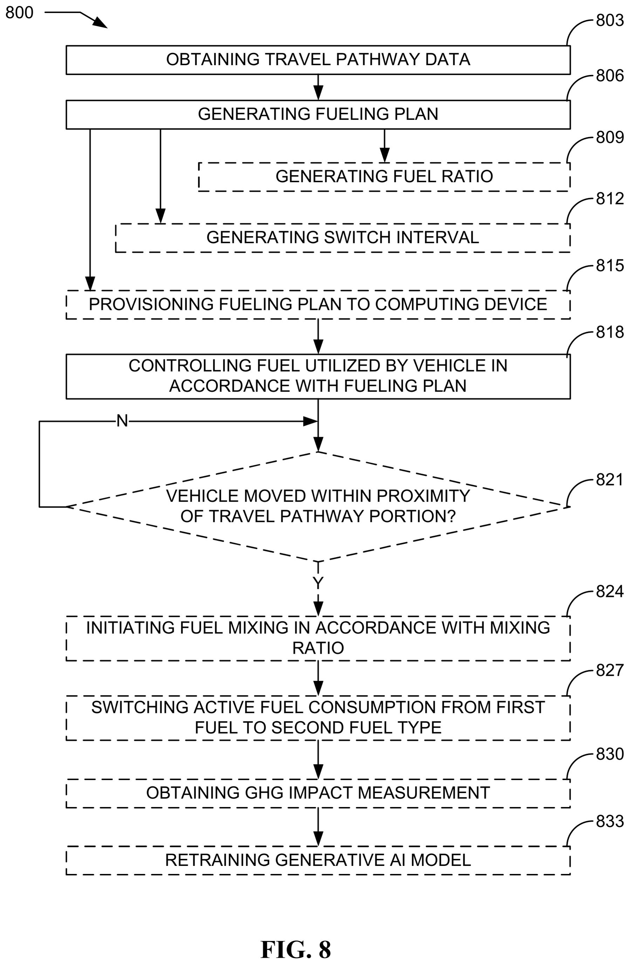

FIG. 8 illustrates a flowchart depicting operations of an example process 800 for performing generative AI-based fuel planning in accordance with at least some example embodiments of the present disclosure. In some embodiments, the process 800 is embodied by computer program code stored on a non-transitory computer-readable storage medium of a computer program product configured for execution to perform the process as depicted and described. Additionally, or alternatively, in some embodiments, the process 800 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more vehicle management systems 102, computing devices 105, external systems 106, and/or the like to perform one or more operations of the process 800.

At operation 803, the apparatus 200 includes means such as the model circuitry 209, the fueling circuitry 211, the communications circuitry 205, the input/output circuitry 207, the processor 201, and/or the like, or a combination thereof, that obtain travel pathway data. For example, the apparatus 200 may obtain travel pathway data 111 from one or more data stores 107, computing devices 105, vehicle management systems 102, external systems 106, and/or the like. In various embodiments, the travel pathway data 111 includes historical environmental data 307 and current environmental data 307 associated with respective portions of the travel pathway. For example, the travel pathway data 111 may include historical and current weather conditions, vehicle traffic densities, emissions thresholds, efficiency thresholds, and/or the like along one or more portions of the travel pathway. In some embodiments, the historical environmental is associated with a historical time interval pursuant to a time interval in which traversal of the travel pathway is scheduled to occur. For example, the traversal of the travel pathway may be scheduled to occur in summer, and, accordingly, the obtained historical environmental data and current environmental data may be associated with the summer season.

In some embodiments, the historical environmental data and current environmental data include respective atmospheric concentrations of one or more GHG along portions of the travel pathway. For example, the historical environmental data and current environmental data include respective atmospheric concentrations of carbon dioxide along a plurality of portions of the travel pathway (e.g., including different geographical regions, altitudes, and/or the like). Additionally, in some embodiments, the apparatus 200 obtains vehicle data 109, fuel availability parameters 113, and/or the like. For example, the apparatus 200 obtains engine data 301, fueling data 303, position data 305, and/or the like associated with the vehicle 101. As another example, the apparatus 200 may obtain available fuel volumes 319, fuel costs 321, and emission factors 323 of fuel types including conventional fossil fuel, reduced-emission fuel, and/or the like.

At operation 806, the apparatus 200 includes means such as the model circuitry 209, the fueling circuitry 211, the communications circuitry 205, the input/output circuitry 207, the processor 201, and/or the like, or a combination thereof, that generate, via a generative AI model, a fueling plan based at least in part on the travel pathway data. For example, the apparatus 200 may generate a fueling plan 121 via a generative AI model 117. In various embodiments, the generative AI model 117 generates the fueling plan 121 based at least in part on the travel pathway data 111 including current and historical environmental data. In some embodiments, the generative AI model 117 generates the fueling plan 121 further based at least in part on vehicle data 109, fuel availability parameters 113, and/or the like. In some embodiments, the generative AI model 117 generates the fueling plan 121 prior to traversal of the vehicle 101 along the travel pathway. In some embodiments, the generative AI model 117 generates, updates, and/or replaces the fueling plan 121 as the vehicle 101 traverses the travel pathway. For example, the apparatus 200 may obtain one or more changes to current environmental data, fuel availability parameters, and/or the like as the vehicle 101 traverses the travel pathway. In response, the generative AI model 117 may generate a second fueling plan 121 (or update a current fueling plan 121) based at least in part on the obtained changes.

In various embodiments, the fueling plan 121 is configured to reduce GHG emissions of the vehicle 101 along one or more portions of the travel pathway. For example, the fueling plan 121 may be configured to minimize GHG emission of the vehicle 101 in accordance with one or more emissions threshold. The minimization of GHG emission may be further subject to constraints of fuel cost, fuel availability, engine efficiency, and/or the like. Additionally, or alternatively, in some embodiments, the fueling plan 121 is configured to reduce GHG emissions of the vehicle 101 in one or more portions of the travel pathway to maintain atmospheric GHG concentration in the portion within a predetermined range. For example, the fueling plan 121 may be configured to reduce emissions of the vehicle 101 along a portion of the travel pathway to maintain the current carbon dioxide concentration in the portion within a predetermined range.

In various embodiments, the generative AI model 117 generates the fueling plan 121 in accordance with the workflow 500 show in FIG. 5 and described herein. For example, the generative AI model 117 may generate a GHG impact prediction 119 (e.g., an estimated GHG emission of the vehicle 101, estimated change to atmospheric GHG concentration, and/or the like). A reward function of the generative AI model 117 may be based at least in part on a negative summation of the GHG impact prediction 119 and one or more fuel availability parameters 113 (e.g., available fuel volume, current fuel cost, efficiency impact, and/or the like). In some embodiments, the generative AI model 117 is configured to map the current environmental data to a fueling plan based at least in part on a policy. In various embodiments, the apparatus 200 performs one or reinforcement learning techniques (e.g., Q-learning, DQN, PPO, and/or the like) to generate an optimal iteration of the policy that is configured to maximize the reward function of the generative AI model (e.g., minimizing GHG impact of the vehicle and resource cost of implementing the fueling plan 121). In various embodiments, in generating the fueling plan 121, the apparatus 200 performs functions in accordance with operations 809, 812, and/or the like, to generate mixing ratios, switch intervals, and/or the like, configured to control fuel utilized by the vehicle 101 over the travel pathway or portions of the travel pathway.

At operation 809, the apparatus 200 includes means such as the model circuitry 209, the fueling circuitry 211, the communications circuitry 205, the input/output circuitry 207, the processor 201, and/or the like, or a combination thereof, that generate one or more mixing ratios via the generative AI model. For example, the apparatus 200 may generate one or more mixing ratios 327 via the generative AI model 117. In various embodiments, the mixing ratio 327 indicates respective proportions of a first fuel type (e.g., conventional fossil fuel) and additional fuel types (e.g., reduced-emission fuel) that may be blended into a fuel mixture prior to or during traversal of the travel pathway. For example, performance of the fueling plan 121 may include causing a vehicle maintainer to prepare a fuel mixture in accordance with the mixing ratio 327 and supply the vehicle 101 with the fuel mixture prior to initiation of movement along the travel pathway. As another example, performance of the fueling plan 121 may include controlling an onboard fuel blend mechanism 131 during traversal of the travel pathway to adjust the fractions of conventional fossil fuel and reduced-emission fossil fuel in a fuel mixture supplied to vehicle engines.

In some embodiments, the generative AI model 117 is configured to generate a plurality of mixing ratio candidates including different combinations of fossil fuel and reduced-emission fuel fractions. In some embodiments, the generative AI model 117 is configured to generate a respective GHG impact prediction 119 for the plurality of mixing ratio candidates. For example, as shown in Table 1, the generative AI model may predict respective required amounts, emission levels, and emission reductions of various fuel types. In some embodiments, the generative AI model 117 is configured to determine, as the mixing ratio for the travel pathway (or portion thereof), one of the plurality of mixing ratio candidates that is associated with a minimum GHG impact prediction 119. In some embodiments, the generative AI model 117 generates, in accordance with the mixing ratio, an interval along the travel pathway at which to initiate mixing of the fuel types. In this manner, the fueling plan 121 may include fuel mixing strategies for dynamic execution as the vehicle 101 proceeds to different portions of the travel pathway.

Table 1.

| B747 - 13 hour flight - Tokyo to New York | | | |
|---|---|---|---|
| Fuel Required (Kg) | Fuel Type | C02 Emissions (Kg) | Emission Reduction % |
| 149760 | Fossil fuel | 473242 | N/A |
| | 50% Blended SAF | 94648 | 80% |
| | 30% Blended SAF | 189297 | 60% |
| | 20% Blended SAF | 283945 | 40% |

In some embodiments, the generative AI model 117 is configured to generate a plurality of condition scenarios that may occur along the travel pathway or portion thereof. In some embodiments, the generative AI model 117 is configured to generate a respective set of GHG impact permutations pursuant to the plurality of condition scenarios and the plurality of mixing ratio candidates (or switch interval candidates). For example, for a respective mixing ratio candidate, the generative AI model 117 may generate a respective GHG impact prediction 119 based on the various condition scenarios. In such contexts, the GHG impact predictions 119 may be referred to as a set of GHG impact permutations for the respective mixing ratio candidate (or switch interval candidate). In some embodiments, the generative AI model 117 is configured to determine, as the mixing ratio, one of the plurality of mixing ratio candidates that is associated with a minimal set of GHG impact permutations. In this manner, the generative AI model 117 may generate a fueling plan 121 comprising mixing ratios that are optimized across all condition scenarios, or a subset of condition scenarios most likely to occur during traversal of the travel pathway.

At operation 812, the apparatus 200 includes means such as the model circuitry 209, the fueling circuitry 211, the communications circuitry 205, the input/output circuitry 207, the processor 201, and/or the like, or a combination thereof, that generate one or more switch intervals via the generative AI model. For example, the apparatus 200 may generate one or more switch intervals 329 via the generative AI model 117. The switch interval 329 may indicate an interval along the travel pathway (e.g., distance, time, and/or the like) at which to switch active fuel consumption of the vehicle 101 from a first fuel type (e.g., conventional fossil fuel) to a second fuel type (e.g., reduced-emission fuel), or vice versa. In some embodiments, the generative AI model 117 is configured to generate respective GHG impact predictions 119 pursuant to a plurality of switch interval candidates. Further, the generative AI model 117 may generate sets of GHG impact permutations for respective switch interval candidates in accordance with various condition scenarios. The generative AI model 117 may determine as the switch interval one of the plurality of switch interval candidates that is associated with a minimum GHG impact prediction or set of GHG impact permutations.

At operation 815, the apparatus 200 optionally includes means such as the model circuitry 209, the fueling circuitry 211, the communications circuitry 205, the input/output circuitry 207, the processor 201, and/or the like, or a combination thereof, that provision the fueling plan to one or more computing devices. For example, the apparatus 200 may provision the fueling plan to a computing device 105. In some embodiments, the computing device 105 is associated with a maintainer of the vehicle 101. In this manner, the apparatus 200 may provision the fueling plan 121 to the computing device 105 to cause the maintainer to prepare a fuel mixture based at least in part on the mixing ratio and supply the vehicle 101 with the fuel mixture. In some embodiments, the computing device is associated with a vehicle management system 102. For example, the apparatus 200 may provision the fueling plan 121 to a computing device accessible to a vehicle operator to enable the vehicle operator to access, view, and/or approve performance of the fueling plan 121.

At operation 818, the apparatus 200 includes means such as the model circuitry 209, the fueling circuitry 211, the communications circuitry 205, the input/output circuitry 207, the processor 201, and/or the like, or a combination thereof, that control fuel utilized by the vehicle in accordance with the fueling plan. For example, the apparatus 200 may control fuel utilized by the vehicle 101 in accordance with the fueling plan 121. In some embodiments, the apparatus 200 causes the vehicle 101 to be fueled prior to traversal of the travel pathway in accordance with a mixing ratio. For example, the apparatus 200 may provision the fueling plan 121 to a maintainer of the vehicle to cause the maintainer to supply the vehicle 101 with a volume of fuel mixture in accordance with a mixing ratio. In some embodiments, the apparatus 200 provisions respective volumes of conventional fossil fuel and reduced-emissions fuel that may be supplied to separate fuel reservoirs of the vehicle 101. In this manner, the vehicle 101 may be fueled with requisite volumes of the fuel types to support dynamic fuel switching and/or fuel mixing as the vehicle 101 traverses the travel pathway.

In some embodiments, in execution of the fueling plan 121, the apparatus 200 causes the vehicle 101 to switch active fuel consumption from fossil fuel to reduced-emission fuel, or vice versa, to control GHG emissions of the vehicle 101 during travel pathway traversal. Alternatively, or additionally, in some embodiments, the apparatus 200 causes the vehicle 101 to mix respective onboard volumes of fossil fuel and reduced-emission fuel in accordance with a mixing ratio during travel pathway traversal. In various embodiments, in execution of the fueling plan 121, the apparatus 200 causes multiple adjustments to the ratio of the fuel mixture provided to the vehicle engines as the vehicle 101 traverses various portions of the travel pathway. Additionally, or alternatively, the apparatus 200 may cause multiple alternations of the fuel consumption of the vehicle between fossil fuel and reduced-emission fuel as the vehicle 101 traverses various portions of the travel pathway.

At operation 821, the apparatus 200 optionally includes means such as the model circuitry 209, the fueling circuitry 211, the communications circuitry 205, the input/output circuitry 207, the processor 201, and/or the like, or a combination thereof, that determine whether the vehicle 101 has moved within a predetermined proximity of a portion of the travel pathway. For example, the apparatus 200 may determine whether the vehicle 101 has moved into a predetermined proximity of the travel pathway. The apparatus 200 may monitor a real-time location of the vehicle 101 via the vehicle management system 102, external systems 106, and/or the like. In various embodiments, in response to determining that the vehicle 101 has moved into a predetermined proximity of a portion of the travel pathway that is associated with a fuel mixing or switching action, the process 800 may proceed to operations 824 or 827. In some embodiments, the apparatus 200 continuously monitors the traversal of the vehicle 101 to determine whether the vehicle 101 has moved into the predetermined proximity of the travel pathway portion and/or met other criteria for execution actions of the fueling plan 121.

At operation 824, the apparatus 200 optionally includes means such as the model circuitry 209, the fueling circuitry 211, the communications circuitry 205, the input/output circuitry 207, the processor 201, and/or the like, or a combination thereof, that initiate, or adjust, fuel mixing onboard the vehicle 101 in accordance with a mixing ratio. For example, in response to the vehicle 101 moving within a predetermined proximity of portion of the travel pathway, the apparatus 200 may initiate or adjust mixing of conventional fossil fuel and reduced emission fuel in accordance with a mixing ratio of the fueling plan 121. In this manner, the GHG emissions of the vehicle 101 and impact on atmospheric GHG concentration may be optimized as the vehicle 101 traverses the portion of the travel pathway. In some embodiments, the apparatus 200 controls (or causes the vehicle management system 102 to control) one or more fuel blending mechanisms of the vehicle 101 based at least in part on the fueling plan 121.

At operation 827, the apparatus 200 optionally includes means such as the model circuitry 209, the fueling circuitry 211, the communications circuitry 205, the input/output circuitry 207, the processor 201, and/or the like, or a combination thereof, that initiate fuel switching between fossil fuel and reduced-emission fuel types in accordance with a switch interval. For example, in response to the vehicle 101 traversing along the travel pathway to a distance or other milestone associated with a switch interval, the apparatus 200 may cause the vehicle 101 to switch active fuel consumption from fossil fuel to reduced-emission fuel, or vice versa. In doing so, the GHG emissions of the vehicle 101 and impact on atmospheric GHG concentration may be optimized as the vehicle 101 traverses the travel pathway. In some embodiments, the apparatus 200 controls (or causes the vehicle management system 102 to control) one or more fuel switching mechanisms of the vehicle 101 based at least in part on the fueling plan 121.

At operation 830, the apparatus 200 optionally includes means such as the model circuitry 209, the fueling circuitry 211, the communications circuitry 205, the input/output circuitry 207, the processor 201, and/or the like, or a combination thereof, that obtain one or more GHG impact measurements associated with the traversal of the vehicle 101 along one or more portions of the travel pathway. For example, the apparatus 200 may obtain from the vehicle management system 102, external systems 106, and/or the like, one or more GHG impact measurements indicative of GHG emissions, changes to atmospheric GHG concentration, and/or the like, within portions of the travel pathway, or over the entire travel pathway. In some embodiments, the apparatus 200 compares the measured GHG impacts to GHG impact predictions 119 generated by the generative AI model 117. For example, the apparatus 200 may generate respective measures of difference between the predicted and measured GHG impacts.

At operation 833, the apparatus 200 optionally includes means such as the model circuitry 209, the fueling circuitry 211, the communications circuitry 205, the input/output circuitry 207, the processor 201, and/or the like, or a combination thereof, that retrain the generative AI model based at least in part on the one or more measurements of GHG impact. For example, the apparatus 200 may retrain the generative AI model 117 based at least in part on respective differences between GHG impact predictions 119 and measured GHG impacts. In doing so, the apparatus 200 may improve accuracy of the generative AI model 117 and further optimize fuel planning strategies generated by the model.

Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A method for reducing greenhouse emission impact, comprising:

    obtaining travel pathway data for a vehicle, the travel pathway data comprising current environmental data and historical environmental data in accordance with at least a portion of a travel pathway;

generating, via a generative artificial intelligence (AI) model, a fueling plan for the vehicle along the at least a portion of the travel pathway based at least in part on the current environmental data and the historical environmental data, wherein:

a reward function of the generative AI model is based at least in part on a negative summation of at least one greenhouse emission estimate for the vehicle along the at least a portion of the travel pathway and at least one fuel availability parameter; and

executing the fueling plan to control fuel utilized by the vehicle during navigation along the travel pathway.

2. The method of claim 1, further comprising, in execution of the fueling plan:

provisioning to a maintainer of the vehicle a mixing ratio between a first fuel type and a second fuel type to cause fueling of the vehicle based at least in part on the mixing ratio, wherein the second fuel type is associated with reduced greenhouse emission compared to the first fuel type.

3. The method of claim 2, wherein:

the at least one fuel availability parameter comprises at least one of an available volume of the second fuel type or a current cost of the second fuel type.

4. The method of claim 2, wherein:

the generative AI model is configured to:

predict a respective greenhouse gas (GHG) impact over the travel pathway pursuant to a plurality of mixing ratio candidates; and

determine, as the mixing ratio between the first fuel type and the second fuel type, one of the plurality of mixing ratio candidates that is associated with a minimum predicted GHG impact.

5. The method of claim 4, wherein:

the generative AI model is further configured to:

predict, in accordance with a respective mixing ratio candidate, a set of GHG impact permutations pursuant to a plurality of condition scenarios along the travel pathway; and

determine, as the mixing ratio between the first fuel type and the second fuel type, one of the plurality of mixing ratio candidates that is associated with a minimal set of GHG impact permutations.

6. The method of claim 1, wherein:

the fueling plan comprises a mixing ratio between a first fuel type and a second fuel type; and

the method further comprises, in execution of the fueling plan:

in response to the vehicle moving within a proximity of the at least a portion of the travel pathway, combining, aboard the vehicle, respective volumes of the first fuel type and the second fuel type in accordance with the mixing ratio.

7. The method of claim 1, wherein:

the fueling plan indicates an interval along the travel pathway at which to switch active fuel consumption of the vehicle from a first fuel type to a second fuel type;

the second fuel type is associated with reduced greenhouse emission compared to the first fuel type; and

the method further comprises, in execution of the fueling plan:

causing the vehicle to switch active fuel consumption from the first fuel type to the second fuel type in response to the vehicle traversing to the interval along the travel pathway.

8. The method of claim 1, wherein:

the current environmental data comprises current carbon dioxide concentration along the at least a portion of the travel pathway;

the historical environmental data comprises historical carbon dioxide concentration along the at least a portion of the travel pathway; and

the fueling plan is configured to reduce emissions of the vehicle along the at least a portion of the travel pathway to maintain the current carbon dioxide concentration within a predetermined range.

9. The method of claim 1, wherein:

the generative AI model is configured to map the current environmental data to the fueling plan based at least in part on a policy; and
the method further comprises:
performing at least one reinforcement learning technique to generate an optimal iteration of the policy, the optimal iteration of the policy being configured to maximize the reward function of the generative AI model.

10. The method of claim 1, wherein:
the current environmental data comprises at least one weather condition pursuant to the at least a portion of the travel pathway.

11. The method of claim 1, wherein:
the current environmental data indicates respective vehicle traffic in accordance with the at least a portion of the travel pathway.

12. An apparatus comprising at least one processor and at least one non-transitory memory having computer-coded instructions stored thereon that, in execution with at least one processor, cause the apparatus to:

obtain travel pathway data for a vehicle, the travel pathway data comprising current environmental data and historical environmental data in accordance with at least a portion of a travel pathway;
generate, via a generative AI model, a fueling plan for the vehicle along the at least a portion of the travel pathway based at least in part on the current environmental data and the historical environmental data, wherein:
a reward function of the generative AI model is based at least in part on a negative summation of at least one greenhouse emission estimate for the vehicle along the at least a portion of the travel pathway and at least one fuel availability parameter; and
execute the fueling plan to control fuel utilized by the vehicle during navigation along the travel pathway.

13. The apparatus of claim 12, wherein:

the fueling plan comprises a mixing ratio between a first fuel type and a second fuel type; and
the instructions, in execution with the at least one processor, further cause the apparatus to:

generate the fueling plan as the vehicle traverses the travel pathway; and
in execution of the fueling plan and in response to the vehicle moving within a proximity of the at least a portion of the travel pathway, cause a mixing of respective onboard volumes of the first fuel type and the second fuel type in accordance with the mixing ratio.

14. The apparatus of claim 13, wherein:
the instructions, in execution with the at least one processor, further cause the apparatus to:

obtain at least one change to the current environmental data as the vehicle traverses the travel pathway;
generate, via the generative AI model, a second fueling plan based at least in part on the at least one change to the current environmental data, the second fueling plan configured to replace the fueling plan and comprising a second mixing ratio between the first fuel type and the second fuel type; and
in execution of the second fueling plan and in response to the vehicle moving within a proximity of the at least a portion of the travel pathway, cause a mixing of respective onboard volumes of the first fuel type and the second fuel type in accordance with the second mixing ratio.

15. A computer program product comprising at least one non-transitory computer-readable storage medium having computer program code stored thereon that, in execution with at least one processor, is configured to:

obtain travel pathway data for a vehicle, the travel pathway data comprising current environmental data and historical environmental data in accordance with at least a portion of a travel pathway;

generate, via a generative AI model, a fueling plan for the vehicle along the at least a portion of the travel pathway based at least in part on the current environmental data and the historical environmental data, wherein:
a reward function of the generative AI model is based at least in part on a negative summation of at least one greenhouse emission estimate for the vehicle along the at least a portion of the travel pathway and at least one fuel availability parameter; and
execute the fueling plan to control fuel utilized by the vehicle during navigation along the travel pathway.

**FIG. 1**

EP 4 760 626 A1

200

MEMORY 203

MODEL CIRCUITRY 209

PROCESSOR 201

INPUT/OUTPUT CIRCUITRY 207

FUELING CONTROL CIRCUITRY 211

COMMUNICATIONS CIRCUITRY 205

**FIG. 2**

**FIG. 3**

EP 4 760 626 A1

FIG. 4

**FIG. 5**

EP 4 760 626 A1

FIG. 6

FIG. 7

800 — 803

| OBTAINING TRAVEL PATHWAY DATA |

806

| GENERATING FUELING PLAN |

809

| GENERATING FUEL RATIO |

812

| GENERATING SWITCH INTERVAL |

815

| PROVISIONING FUELING PLAN TO COMPUTING DEVICE |

818

| CONTROLLING FUEL UTILIZED BY VEHICLE IN ACCORDANCE WITH FUELING PLAN |

N

821

VEHICLE MOVED WITHIN PROXIMITY OF TRAVEL PATHWAY PORTION?

Y

824

| INITIATING FUEL MIXING IN ACCORDANCE WITH MIXING RATIO |

827

| SWITCHING ACTIVE FUEL CONSUMPTION FROM FIRST FUEL TO SECOND FUEL TYPE |

830

| OBTAINING GHG IMPACT MEASUREMENT |

833

| RETRAINING GENERATIVE AI MODEL |

**FIG. 8**

Europäisches
Patentamt

European
Patent Office

Office européen
des brevets

# EUROPEAN SEARCH REPORT

**Application Number**

EP 25 21 8656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/103860 A1 (DE OLIVEIRA ITALO ROMANI [BR] ET AL) 8 April 2021 (2021-04-08) | 1,10-12, 15 | INV. G06Q50/06 G06N3/08 |
| A | * paragraph [0055] - paragraph [0060]; figure 4 * * paragraph [0037] - paragraph [0045]; figure 2 * * paragraph [0069] - paragraph [0070]; figures 13,14 * | 2-8,13, 14 | G06N3/045 G01C21/34 |
| X | US 2021/285787 A1 (ALEKSEENKO MIKHAIL [US]) 16 September 2021 (2021-09-16) * paragraph [0020] - paragraph [0039]; figures 1-3 * | 1-15 | |
| A | US 2023/235708 A1 (LAVERTU THOMAS MICHAEL [US] ET AL) 27 July 2023 (2023-07-27) * paragraph [0050] - paragraph [0054]; figure 7 * | 1-15 | |

**TECHNICAL FIELDS SEARCHED (IPC)**

G06Q
G06N
G01C

The present search report has been drawn up for all claims

| Place of search | Date of completion of the search | Examiner |
|---|---|---|
| Munich | 22 April 2026 | Radovic, Dusica |

EPO FORM 1503 03.82 (P04C01)

## ANNEX TO THE EUROPEAN SEARCH REPORT
## ON EUROPEAN PATENT APPLICATION NO.

EP 25 21 8656

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | Publication date | Patent family member(s) | Publication date |
|---|---|---|---|
| US 2021103860 A1 | 08-04-2021 | NONE | |
| US 2021285787 A1 | 16-09-2021 | US 2021285787 A1<br>WO 2020081945 A1 | 16-09-2021<br>23-04-2020 |
| US 2023235708 A1 | 27-07-2023 | EP 4219926 A1<br>US 2023235708 A1 | 02-08-2023<br>27-07-2023 |

EPO FORM P0459

For more details about this annex : see Official Journal of the European Patent Office, No. 12/82